(19) Europäisches Patentamt
European Patent Office
Office européen des brevets

(11) **EP 2 964 512 B1**

(12) **FASCICULE DE BREVET EUROPEEN**

(45) Date de publication et mention
de la délivrance du brevet:
**29.03.2017 Bulletin 2017/13**

(21) Numéro de dépôt: **14701996.2**

(22) Date de dépôt: **29.01.2014**

(51) Int Cl.:
***B62D 47/00*** *(2006.01)*    ***B62D 53/00*** *(2006.01)*

(86) Numéro de dépôt international:
**PCT/EP2014/051672**

(87) Numéro de publication internationale:
**WO 2014/135310 (12.09.2014 Gazette 2014/37)**

(54) **VEHICULE AUTOMOBILE ROUTIER ATTELABLE**

ZIEHBARES STRASSENKRAFTFAHRZEUG

TOWABLE ROAD MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.03.2013 FR 1352128**

(43) Date de publication de la demande:
**13.01.2016 Bulletin 2016/02**

(60) Demande divisionnaire:
**17154119.6**

(73) Titulaires:
• **Commissariat à l'Energie Atomique et aux Energies Alternatives
75015 Paris (FR)**
• **Metacar Transport Systems
38000 Grenoble (FR)**

(72) Inventeurs:
• **CERVANTES, Valery
F -38000 Grenoble (FR)**
• **LABORDE, Jérôme
F-69003 Lyon (FR)**

(74) Mandataire: **Colombo, Michel
GIE Innovation Competence Group
310 bis Avenue Berthelot
69008 Lyon (FR)**

(56) Documents cités:
EP-A1- 1 046 574      WO-A1-98/40263
WO-A2-2007/010062      US-A- 5 417 300

## Description

L'invention concerne un véhicule automobile routier attelable. L'invention concerne également un convoi automobile routier formé de ces véhicules et un procédé de commande de ces véhicules.

On connaît des véhicules automobiles routiers articulés aptes à être attachés entre eux par des attelages sans degré de liberté en rotation en lacet pour former des convois routiers automobiles à trajectoire monotrace. Un tel convoi est apte à être piloté par un unique conducteur. Le brevet EP-1046574-B1 (WILLIAM M.C. RENDALL) décrit un exemple de tels véhicules pour un système de mobilité urbaine.

Ces véhicules comportent typiquement :

- au moins trois roues, aptes à faire rouler le véhicule automobile sur une route plane, réparties entre deux trains avant et arrière de roues du véhicule automobile ;
- un châssis, comportant :

  • une partie avant sur laquelle est fixée le train avant ;
  • une partie arrière sur laquelle est fixée le train arrière ;
  • un dispositif d'articulation, interposé entre les parties avant et arrière du châssis, ce dispositif d'articulation permettant à la partie avant de pivoter, par rapport à la partie arrière, autour d'un axe d'articulation normal à un plan de roulement du véhicule, de manière à modifier un angle d'articulation du véhicule, ce plan de roulement étant défini comme étant le plan passant par les surfaces de contact entre la route et les roues du véhicule ;

- des attelages avant et arrière, situés, respectivement, à l'avant et à l'arrière du véhicule automobile,

  • l'attelage avant étant déplaçable, en alternance, entre :

    ◦ une position attelée, dans laquelle cet attelage avant coopère avec un attelage arrière, identique à l'attelage arrière de ce véhicule et situé sur un autre véhicule, pour attacher mécaniquement, sans degré de liberté en rotation en lacet, ces véhicules entre eux, et aligner la partie avant de ce véhicule avec la partie arrière de l'autre véhicule, et
    ◦ une position dételée, dans laquelle ces véhicules sont détachés l'un de l'autre ;

  • l'attelage arrière étant déplaçable, en alternance, entre :

    ◦ une position attelée, dans laquelle cet attelage arrière coopère avec un attelage avant, identique à l'attelage avant de ce véhicule et situé sur un autre véhicule, pour attacher mécaniquement, sans degré de liberté en rotation en lacet, ces véhicules entre eux et aligner la partie arrière de ce véhicule avec la partie avant de l'autre véhicule, et
    ◦ une position dételée, dans laquelle ces véhicules sont détachés l'un de l'autre.

De l'état de la technique est également connu des documents suivants :

- WO2007/10062 A2 (RENDALL WILLIAM MICHAEL) ;
- US 5417300 A (SCHULTZ RICHARD E) ;
- WO 98/40263 (TOIT CHARL WILHELMUS DU).

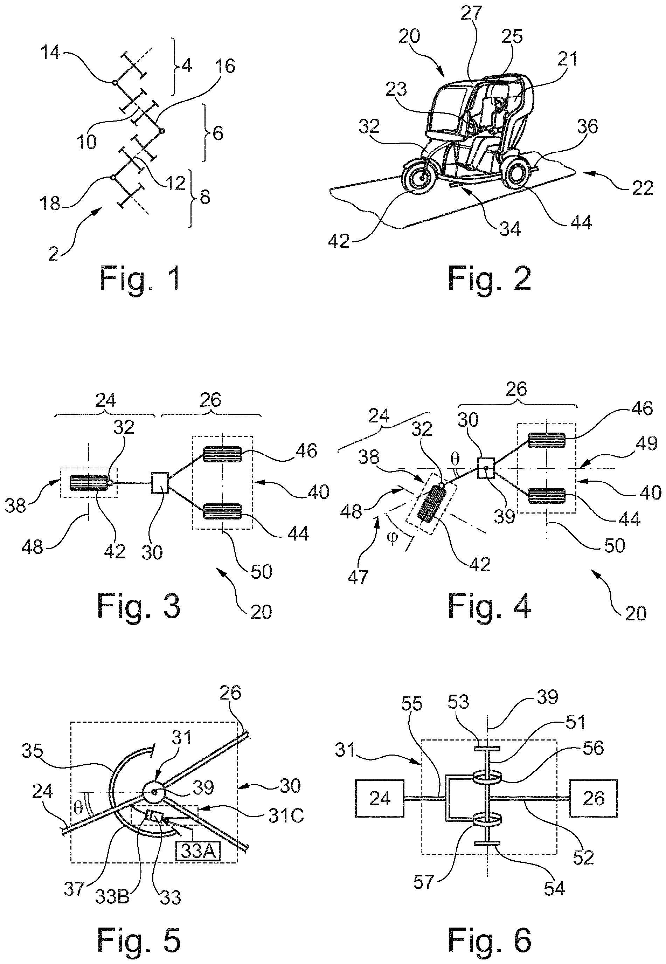

Ainsi, un convoi peut être formé avec une compacité accrue. Ces véhicules présentent cependant des inconvénients. Notamment, un convoi automobile routier formé de ces véhicules présente une manoeuvrabilité limitée lorsque le véhicule situé en tête du convoi doit être braqué sur place, par exemple, pour sortir d'une place de stationnement et s'engager dans une file de circulation. En effet, un braquage sur place du train avant du véhicule situé en tête du convoi engendre un contre-braquage du train arrière de ce véhicule. Ce contre-braquage se propage aux autres véhicules du convoi routier automobile, conduisant à un pliage « en accordéon » du convoi. La figure 1 représente schématiquement un tel convoi 2 plié en accordéon. Ce convoi 2 est ici formé de trois véhicules automobiles 4, 6, 8, identiques et attachés entre eux par des attelages 10, 12 sans degré de liberté en rotation en lacet. Les dispositifs de direction (assurés ici par des dispositifs d'articulations de châssis) 14, 16, 18 respectifs de chacun de ces véhicules 4, 6, 8 sont braqués dans des sens opposés deux à deux. À cause de ce pliage en accordéon du convoi, il faut exercer un effort très important sur le dispositif de direction du véhicule de tête pour effectuer un braquage sur place pour changer de file de circulation. En effet, l'effort à exercer correspond à celui nécessaire pour braquer les roues du véhicule de tête auquel s'ajoute l'effort nécessaire pour plier en accordéon le convoi. Ceci rend son déplacement difficile.

Il existe donc un besoin pour un véhicule automobile routier articulé attelable, dont l'attelage ne présente pas de degré de liberté en rotation en lacet, ce véhicule présentant une manoeuvrabilité accrue en situation de braquage sur place lorsqu'il est attaché avec d'autres véhicules automobiles pour former un convoi automobile routier.

Dans cette description, on nomme « véhicule articulé » un véhicule automobile comportant le dispositif d'articulation.

Par rotation en lacet, on désigne ici un mouvement de rotation uniquement autour d'un axe perpendiculaire au plan de roulement du véhicule. Le plan de roulement d'un véhicule est défini comme le plan passant par les surfaces de contact entre les roues du véhicule et la route sur la quelle circule ce véhicule.

L'attelage est dit être sans degré de liberté si, lorsque deux attelages avant et arrière sont attelés entre eux, l'angle maximal de rotation en lacet de ces attelages l'un par rapport à l'autre dû aux jeux mécaniques est inférieur à 10° ou à 5° ou à 3° ou à 2°.

L'invention concerne donc un véhicule routier attelable conforme à la revendication 1.

Ainsi, en équipant le train avant du véhicule d'un dispositif de direction, actionnable indépendamment du dispositif d'articulation, le véhicule peut être manoeuvré sur place sans provoquer de contre-braquage du train arrière. L'effort requis pour braquer sur place le véhicule de tête du convoi est alors considérablement réduit, puisque l'utilisation du dispositif de direction de ce véhicule n'entraîne pas un pliage en accordéon du convoi.

Les modes de réalisation de l'invention peuvent présenter une ou plusieurs des caractéristiques des revendications 2 à 11.

Ces modes de réalisation présentent en outre les avantages suivants :

- la position équidistante de l'axe instantané de rotation de l'articulation des parties de chassis avant et arrière par rapport aux axes transversaux des trains de roues du véhicule permet l'inscription dans une seule trace de la trajectoire en courbe de chaque véhicule suiveur d'un convoi routier comportant plusieurs de ces véhicules attachés entre eux, les véhicules suiveurs étant les véhicules du convoi situés derrière le véhicule en tête du convoi ; on parle alors de convoi « monotrace » ;
- les trains avant et arrière emboîtables entre eux permettent de réduire l'espace séparant deux véhicules automobiles attachés entre eux, et donc de réduire l'encombrement d'un convoi routier formé de véhicules attachés entre eux ;
- en emboîtant les trains avant et arrière de sorte que leurs axes transversaux soient confondus, le ripage des roues de ces trains de roues dans une trajectoire courbe est éliminé.
- la faible valeur du déport de chasse du train avant limite l'effort mécanique à appliquer pour braquer ce train avant à l'aide du dispositif de direction ;
- la configuration des butées mécaniques, pour obtenir un plus petit rayon de braquage du dispositif de direction du véhicule de tête supérieur au plus petit rayon de braquage engendré par les dispositifs d'articulation des autres véhicules permet la formation d'un convoi formé de véhicules attachés entre eux et présentant des empattements différents, tout en réduisant le risque de blocage de ce convoi routier à cause du blocage en butée du dispositif d'articulation d'un de ces véhicules ;
- en attachant l'habitacle sur la partie avant du véhicule, et en fixant le siège conducteur dans l'habitacle, on évite que le volant, de ce véhicule se déplace par rapport au conducteur lorsque le convoi tourne. Ainsi, on évite qu'un conducteur ou un occupant de l'habitacle ne soit blessé par un mouvement du volant.

Selon un autre aspect, l'invention concerne également un convoi routier automobile conforme à la revendication 12.

Selon un autre aspect, l'invention concerne également un procédé de commande d'un véhicule automobile routier attelable conforme à la revendication 13.

Les modes de réalisation de l'invention peuvent comporter la caractéristique de la revendication 14.

Selon un autre aspect, l'invention concerne également un procédé de commande d'un convoi automobile routier conforme à la revendication 15.

Les modes de réalisation de l'invention peuvent comporter la caractéristique de la revendication 16.

L'invention sera mieux comprise à la lecture de la description qui va suivre, donnée uniquement à titre d'exemple non limitatif et faite en se référant aux dessins sur lesquels :

- la figure 1 est une illustration schématique, en vue de dessus, d'un convoi routier automobile plié en accordéon suite à une manoeuvre de braquage sur place ;
- la figure 2 représente schématiquement en perspective un véhicule automobile routier attelable ;
- les figures 3 et 4 représentent schématiquement, selon une vue de dessus, une géométrie des trains de roues avant et arrière du véhicule de la figure 2 ;
- la figure 5 représente schématiquement un exemple d'un dispositif d'articulation entre des parties avant et arrière de châssis du véhicule de la figure 2 ;

- la figure 6 représente schématiquement, selon une vue de profil, une articulation mécanique du dispositif d'articulation de la figure 5 ;
- les figures 7 et 8 représentent schématiquement des attelages avant et arrière du véhicule de la figure 2 ;
- la figure 9 représente schématiquement, selon une vue de face, le train arrière de roues du véhicule de la figure 2 ;
- la figure 10 représente schématiquement, selon une vue de face, le train avant de roues et le dispositif de direction du véhicule de la figure 2 ;
- la figure 11 représente schématiquement, selon une vue de profil, le déport de chasse du dispositif de direction et le train avant de roues de la figure 10 ;
- les figures 12 et 13 représentent schématiquement, respectivement en vues de profil et de dessus, un convoi routier automobile comportant le véhicule de la figure 2 ;
- la figure 14 représente schématiquement l'agencement des trains de roues du convoi routier des figures 12 et 13 le long d'une trajectoire courbe ;
- la figure 15 est un organigramme d'un procédé de commande du dispositif de direction du véhicule de la figure 2 ;
- la figure 16 représente schématiquement, en vue de dessus, une autre disposition des trains de roues de véhicules attachés entre eux pour former le convoi de la figure 13 ;
- les figures 17 à 19 représentent schématiquement, en vue de dessus, des variantes du dispositif d'articulation de la figure 5 ;
- la figure 20 représente schématiquement, selon une vue de dessus, un autre mode de réalisation du dispositif de direction de la figure 10 lorsque le train avant du véhicule de la figure 2 comporte plus d'une roue ;
- les figures 21 et 22 représentent schématiquement un convoi routier automobile formé de deux véhicules automobiles attelables de la figure 2 attachés entre eux ;
- la figure 23 représente schématiquement un exemple de définition d'un train de roues équivalent d'un train de roues du véhicule automobile de la figure 2 ;
- la figure 24 est un organigramme d'un procédé de réalisation d'un braquage en marche arrière avec le convoi de la figure 20.

Dans ces figures, les mêmes références sont utilisées pour désigner les mêmes éléments.

Dans la suite de cette description, les caractéristiques et fonctions bien connues de l'homme du métier ne sont pas décrites en détails.

Les figures 2 à 4 représentent un véhicule automobile 20 routier attelable. Ce véhicule 20 est apte à se déplacer sur une route 22 (figure 2), par exemple plane. Ici, cette route 22 est plane et horizontale. Dans cet exemple, ce véhicule 20 comporte :

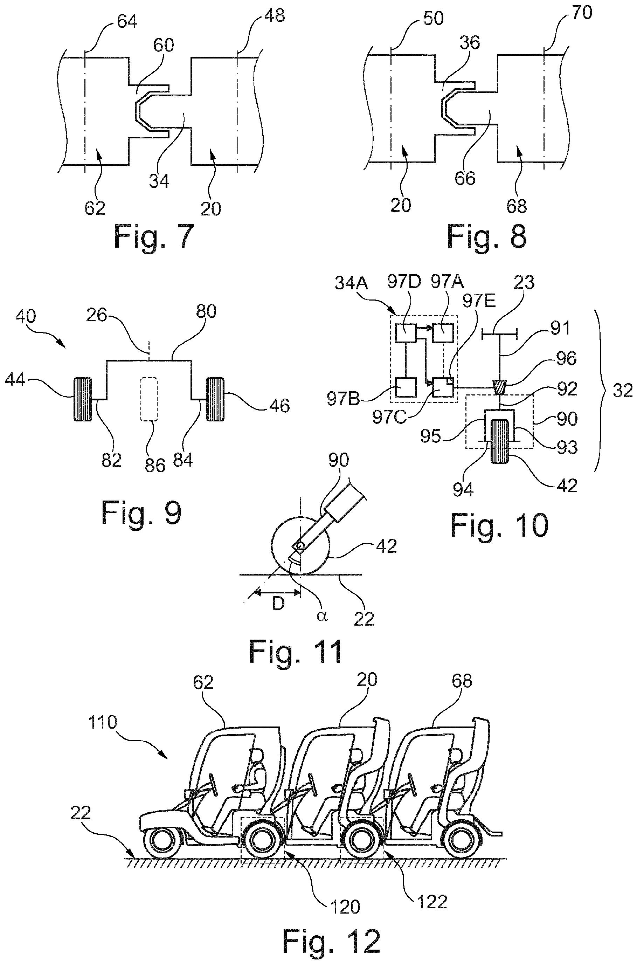

- trois roues ;
- un châssis, incluant des parties avant 24 et arrière 26 (figures 3 et 4);
- des dispositifs d'articulation 30 et de direction 32 (figures 3 et 4);
- des attelages avant 34 et arrière 36 (figures 7 et 8);
- un moteur, tel qu'un moteur électrique, apte à propulser le véhicule 20.

Le véhicule 20 est piloté par un conducteur. A cet effet, le véhicule 20 comporte un siège conducteur 21 et un poste de conduite. Ce poste de conduite inclut des commandes du moteur et un volant directionnel 23 pour diriger le véhicule 20. Ce véhicule 20 comporte ici également un siège passager 25. Le poste de conduite et le siège conducteur 21 sont ici fixés à l'intérieur d'un habitacle 27 du véhicule 20. L'habitacle 27 est solidaire sans degré de liberté en lacet de la partie 24 et repose ici entièrement sur cette partie 24. Ainsi, l'habitacle 27 et la partie avant 24 du châssis se déplacent en même temps. L'habitacle 27 n'est pas raccordé mécaniquement directement à la partie 26. L'habitacle 27 se déplace donc en lacet par rapport à la partie arrière 26 du châssis lorsque la partie arrière 26 se déplace par rapport à la partie avant 24.

Le siège conducteur 21 est ici fixé à l'intérieur de l'habitacle 27 tout en permettant un déplacement limité pour régler la position du siège 21 par exemple en fonction de la taille et de la corpulence d'un occupant de ce siège 21. Par exemple, le siège 21 peut présenter un déplacement limité en translation par rapport à l'habitacle 27 selon un degré de liberté. Par déplacement limité, on entend ici que le siège 21 est apte à se déplacer par rapport à l'habitacle 27 avec une course inférieure ou égale à 50cm ou à 25cm.

Ici, le véhicule 20 comporte en outre une caisse, qui repose à la fois sur les parties 24 et 26.

Les roues sont aptes à faire rouler le véhicule 20 sur la route 22. Ces roues sont placées sur le véhicule de manière à former des trains avant 38 et arrière 40 de roues. Ces trains 38 et 40 sont ici fixés, respectivement, sur les parties 24 et 26 du châssis. Ces roues sont par exemple équipées de pneumatiques.

Pour chacun de ces trains de roues, on définit un « axe transversal » de la manière suivante :

- si le train de roues ne comporte qu'une seule roue, l'axe transversal est l'axe parallèle à l'axe de roulement de cette roue autour de son moyeu et passant par le centre géométrique de la surface de contact entre la route 22 et cette roue, lorsque cette roue n'est pas braquée, et

- si le train de roues comporte plus d'une roue, l'axe transversal est l'axe passant par les centres géométriques des surfaces de contact entre la route 22 et ces roues, lorsque ces roues ne sont pas braquées.

Chacun de ces axes transversaux est solidaire, sans degré de liberté, de la partie de châssis sur laquelle est fixée le train de roues respectif associé à cet axe transversal.

L'axe de roulement d'une roue est défini comme étant l'axe de rotation horizontal autour duquel la roue tourne lorsqu'elle roule sur la route 22.

Le dispositif 32 est ici apte à braquer une ou plusieurs roues du véhicule. Les roues pouvant être braquées sont dites être des roues « directrices ». Les roues non directrices ne peuvent pas être braquées et sont donc en permanence dans une position non braquée.

Les roues d'un véhicule sont dites non braquées lorsqu'elles sont alignées entre elles dans une position telle qu'un véhicule automobile, identique au véhicule 20 mais dans lequel le dispositif 30 est remplacé par une liaison rigide empêchant tout mouvement des parties 24 et 26 l'une par rapport à l'autre, est apte à se déplacer en ligne droite.

Toutes les roues d'un même train sont généralement alignées le long de l'axe transversal de ce train lorsque ces roues ne sont pas braquées.

Dans cet exemple, le train 38 comporte une unique roue 42. Le train 40 comporte deux roues 44 et 46, ici identiques et disposées parallèlement l'une à l'autre. L'axe de roulement des roues 44, 46 est fixé, sans aucun degré de liberté en rotation en lacet, à la partie arrière 26 du châssis. On définit ainsi, selon la définition précédente, des axes transversaux 48 et 50, respectivement, pour les trains 38 et 40.

On définit également un plan longitudinal du véhicule 20 comme étant le plan :

- perpendiculaire à ces axes 48 et 50, lorsque ces axes 48 et 50 sont parallèles entre eux et que les roues du véhicule 20 ne sont pas braquées, et

- passant par les milieux des trains 38 et 40.

Dans la suite de cette description, on considérera la projection orthogonale de ce plan sur le plan de roulement. On parlera alors d'axe longitudinal pour désigner l'axe résultant de cette projection. Ici, le milieu du train 38 est le centre de la roue 42 et le milieu du train 40 est le point équidistant des centres de contact entre la route 22 et les roues 44 et 46.

On définit un axe longitudinal 47 de la partie 24 du véhicule 20 comme étant l'axe solidaire de la partie 24 qui est confondu avec l'axe longitudinal du véhicule lorsque les axes 48 et 50 sont parallèles et que les roues du véhicule 20 ne sont pas braquées.

De même, on définit un axe longitudinal 49 de la partie 26, comme étant l'axe solidaire de la partie 26 confondu avec l'axe longitudinal du véhicule 20 lorsque les axes 48 et 50 sont parallèles et que les roues du véhicule 20 ne sont pas braquées.

Le plan de roulement est le plan passant par les surfaces de contact entre la route 22 et les roues 42, 44 et 46. Ce plan de roulement est ici horizontal.

Le dispositif 30 permet aux parties 24 et 26 de pivoter l'une par rapport à l'autre autour d'un axe 39, dit d'articulation, normal à un plan de roulement du véhicule afin de modifier un angle d'articulation $\theta$ (figure 4) du véhicule 20. Cet angle $\theta$ est ici défini comme l'angle aigu entre les axes longitudinaux 47 et 49 des parties, respectivement, 24 et 26. Cet axe 39 est ici confondu avec l'axe instantané de rotation des parties 24 et 26 l'une par rapport à l'autre. Les axes 47 et 49 présentent ici une intersection avec l'axe 39.

La figure 5 représente plus en détail un exemple de ce dispositif 30. Dans cet exemple, ce dispositif 30 comporte :

- une articulation mécanique 31,
- un mécanisme commandable 31C de verrouillage de l'articulation 31 pour maintenir l'angle $\theta$ à sa valeur nulle ;
- une unité 33A de pilotage automatique apte à commander le mécanisme 31C,
- des butées 35 et 37, agencées sur le châssis pour limiter le plus petit rayon de braquage autorisé par le dispositif 30.

Le mécanisme 31C est apte à basculer, en alternance, entre :

- une position verrouillée, dans laquelle il maintient les parties 24 et 26 du véhicule 20 alignées l'une par rapport à l'autre , et
- une position déverrouillée, dans laquelle les parties 24 et 26 sont libres de pivoter, l'une par rapport à l'autre, en rotation autour de l'axe d'articulation 39.

Les parties 24 et 26 sont dites alignées l'une par rapport à l'autre si leurs axes longitudinaux 47 et 49 sont ici confondus.

Ce mécanisme 31C comporte ici :

- un actionneur 33, pour modifier l'angle θ en réponse à un signal de commande, fourni par l'unité 33A, et
- un capteur 33B pour mesurer l'angle θ.

Avantageusement, le dispositif 30 est apte à maintenir, uniquement grâce à sa conformation mécanique, l'axe instantané de rotation de la partie 24 par rapport à la partie 26 :

- à équidistance des axes transversaux 48, 50 des trains de roues du véhicule, lorsque ces axes transversaux sont parallèles, et
- sur la bissectrice de l'angle aigu formé par ces axes transversaux 48, 50 lorsque ces axes transversaux ne sont pas parallèles et que les roues du véhicule 20 ne sont pas braquées.

Ici, l'articulation 31 est située à équidistance des axes 48 et 50 lorsque ces axes sont parallèles. Le centre instantané de rotation de la partie 24 par rapport à la partie 26 est donc bien situé sur l'axe 39, et est ici équidistant des axes 48 et 50.

De préférence, l'articulation 31 comporte un limiteur de tangage configuré pour limiter le mouvement en tangage des parties 24 et 26 l'une par rapport à l'autre. Par tangage d'une partie du châssis, on désigne ici un mouvement de balancement d'avant en arrière de cette partie de châssis lorsque le véhicule 20 se déplace en ligne droite sur la route 22. Avantageusement, l'articulation 31 comporte en outre un limiteur de roulis pour limiter le mouvement de roulis entre les parties 24 et 26. Par roulis d'une partie de châssis, on désigne ici un mouvement de pivotement latéral autour de l'axe longitudinal de cette partie de châssis lorsque le véhicule 20 se déplace en ligne droite sur la route 22.

L'articulation 31 solidarise ici les deux parties 24 et 26 de façon non détachable.

L'actionneur 33 est ici mécaniquement raccordé directement entre les parties 24 et 26. En plus du verrouillage de l'articulation 31, l'actionneur 33 permet ici de repousser et, en alternance, d'attirer l'une vers l'autre ces parties 24, 26 en les faisant pivoter autour de l'axe 39. En réponse à une commande, l'actionneur 33 est apte à déplacer les parties 24 et 26 pour obtenir une valeur prédéterminée de l'angle θ puis à maintenir l'angle θ à cette valeur tant qu'une nouvelle commande n'est pas reçue. Par exemple, l'actionneur 33 comporte un ou plusieurs vérins tels que des vérins hydrauliques.

Les butées 35, 37 sont ici fixées sans aucun degré de liberté sur la partie 24. Elles sont disposées pour venir en butée sur des contre-butées respectives montées sans aucun degré de liberté sur la partie 26 afin de limiter le débattement angulaire de l'articulation 31. Elles maintiennent donc la valeur de l'angle θ dans une plage $[\theta_{min} ; \theta_{max}]$. La position dans laquelle les parties 24 et 26 sont alignées l'une par rapport à l'autre correspond à la valeur zéro de l'angle θ. Par exemple, la plage angulaire $[\theta_{min} ; \theta_{max}]$ est symétrique autour de la valeur zéro et comprise entre -90° et +90° ou entre -55° et 55°.

Le véhicule est donc apte à se déplacer en ligne droite lorsque les parties 24 et 26 sont alignées et que les roues ne sont pas braquées.

La figure 6 représente un exemple de l'articulation 31 du dispositif 30. Cette articulation 31 comporte :

- un arbre vertical 51, relié mécaniquement et sans aucun degré de liberté à la partie 26 par une barre 52, et
- des anneaux 56, 57 raccordés mécaniquement et sans aucun degré de liberté à la partie 24 du châssis par une barre 55.

L'arbre 51 est reçu à rotation à l'intérieur des anneaux 56, 57. Des épaulements 53, 54, aux extrémités de l'arbre 51, le retiennent à l'intérieur des anneaux 56, 57. Ici, les anneaux 56, 57 sont disposés, respectivement, entre la barre 52 et l'épaulement 53, et entre la barre 52 et l'épaulement 54. Ainsi, les parties 24 et 26 peuvent pivoter autour de l'axe 39. Le jeu réduit entre l'arbre 51 et l'espace intérieur des anneaux 56, 57 limite ici les mouvements de tangage et de roulis des parties 24, 26 l'une par rapport à l'autre.

Les figures 7 et 8 représentent plus en détail, respectivement, les attelages 34 et 36. Les attelages 34 et 36 sont situés, respectivement, à l'avant et à l'arrière du véhicule 20. Ici, ces attelages 34 et 36 sont ancrés aux parties, respectivement, 24 et 26 du châssis, sans degré de liberté en rotation en lacet.

L'attelage 34 est déplaçable, en alternance, entre des positions attelée et dételée. Dans sa position attelée (figure 7), l'attelage 34 coopère avec un attelage arrière 60 situé sur un autre véhicule 62 pour l'attacher mécaniquement au véhicule 20. Ici, le véhicule 62 est identique au véhicule 20. Sur la figure 7, l'axe transversal du train de roues arrière du véhicule 62 porte la référence 64. De plus, pour améliorer la lisibilité des figures 7 et 8, les axes transversaux des trains roulants des véhicules attachés sont représentés distants, l'un à côté de de l'autre.

Dans la position attelée, la partie avant 24 du véhicule 20 est mécaniquement raccordée, sans aucun degré de liberté en rotation en lacet, à la partie arrière du châssis du véhicule 62. Par exemple, pour cela, les attelages 34 et 60 sont équipés chacun de pièces rigides de formes complémentaires aptes à être emboîtées l'une dans l'autre par encastrement. Par exemple, l'attelage 34 présente une pièce rigide de forme convexe et l'attelage 60 présente une pièce rigide de forme concave. De préférence, ces formes concave et convexe ne sont pas arrondies, de façon à empêcher toute rotation autour d'un axe vertical de l'attelage 34 par rapport à l'attelage 60 lorsque ces attelages 34 et 60 sont attelés. Par exemple, les pièces rigides sont en matière métallique et fixées aux parties correspondantes des châssis des véhicules 20 et 62 sans degré de liberté en rotation en lacet. Ainsi, les axes longitudinaux respectifs de la partie 24 et de la partie arrière du véhicule 62 sont alignés parallèlement l'un par rapport à l'autre. En outre, les axes 48 et 64 sont maintenus à une distance constante l'un de l'autre, à 1 % ou à 3 % près, par exemple, grâce à un dispositif de maintien. Par exemple, ce dispositif de maintien comporte ici deux aimants, de polarité opposée, disposés en regard l'un de l'autre sur les parties 24 et 26.

Afin de limiter l'espace entre les véhicules 20 et 62 dans la position attelée, l'avant du véhicule 20 et l'arrière du véhicule 62 présentent des formes complémentaires l'une par rapport à l'autre pour permettre aux axes 48 et 64 d'être confondus dans la position attelée. Pour cela, le train avant 38 du véhicule 20 et le train arrière du véhicule 62 présentent des formes complémentaires.

Dans ces conditions, dans la position attelée, la roue 42 du véhicule 20 est alignée sur un même axe transversal que les roues du train arrière du véhicule 62. On dit alors que ces trains sont complètement emboîtés. Cela réduit le ripage subi par les roues des trains emboîtés lorsque les véhicules attachés entre eux suivent une trajectoire courbe, par exemple en virage. L'usure des pneumatiques de ces roues est ainsi réduite, et la tenue de route de ces véhicules est améliorée.

Dans la position dételée, ces deux véhicules 20 et 62 sont détachés l'un de l'autre, et sont libres de se déplacer indépendamment l'un de l'autre.

De façon analogue, l'attelage 36 est déplaçable, en alternance, entre des positions attelée et dételée. Dans sa position attelée (figure 8), l'attelage 36 coopère avec un attelage avant 66, situé sur un véhicule 68, pour attacher mécaniquement ces véhicules entre eux. A cet effet, les attelages 36 et 66 sont, respectivement, identiques aux attelages 60 et 34. Le véhicule 68 est, par exemple, identique au véhicule 20. Sur la figure 8, l'axe transversal du train avant de roues du véhicule 68 porte la référence 70.

La figure 9 représente plus en détail le train 40. Ce train 40 comporte :

- les roues 44, 46, et
- une traverse 80, reliée mécaniquement, sans aucun degré de liberté en rotation en lacet, à la partie 26.

La traverse 80 s'étend parallèlement à l'axe 50 du train 40. Cette traverse 80 relie mécaniquement entre elles des moyeux 82, 84 respectivement, des roues 44 et 46. La traverse 80 est sur-élevée par rapport à l'axe de roulement des roues 44 et 46, de manière à ménager un emplacement 86 pour la roue avant du véhicule 68 lorsque ces véhicules sont attachés entre eux au moyen de l'attelage 36. Par exemple, cette traverse 80 est surélevée d'une distance supérieure au rayon de la roue 42.

Cette complémentarité de formes permet de réduire l'espace séparant deux véhicules attachés entre eux, et donc de réduire l'encombrement d'un convoi routier formé de ces véhicules attachés.

La figure 10 représente un exemple du dispositif 32 pour modifier la direction de la trajectoire du véhicule 20. Le dispositif 32 est apte à modifier l'angle de braquage φ (figure 4) de la roue 42 en réponse à une commande d'un conducteur du véhicule 20. L'angle de braquage d'une roue avant du véhicule 20 est ici défini comme étant l'angle aigu entre le plan vertical perpendiculaire à l'axe de roulement de la roue et le plan vertical contenant l'axe longitudinal 47 de la partie 24. Pour simplifier la figure 4, le dispositif 32 est représenté déporté à l'arrière de la roue 42. Lorsque la roue 42 n'est pas braquée, cet angle φ est nul.

Ce dispositif 32 est notamment apte à être actionné par un conducteur :

- indépendamment du dispositif 30, et
- uniquement lorsque l'attelage 34 du véhicule 20 est dans sa position dételée.

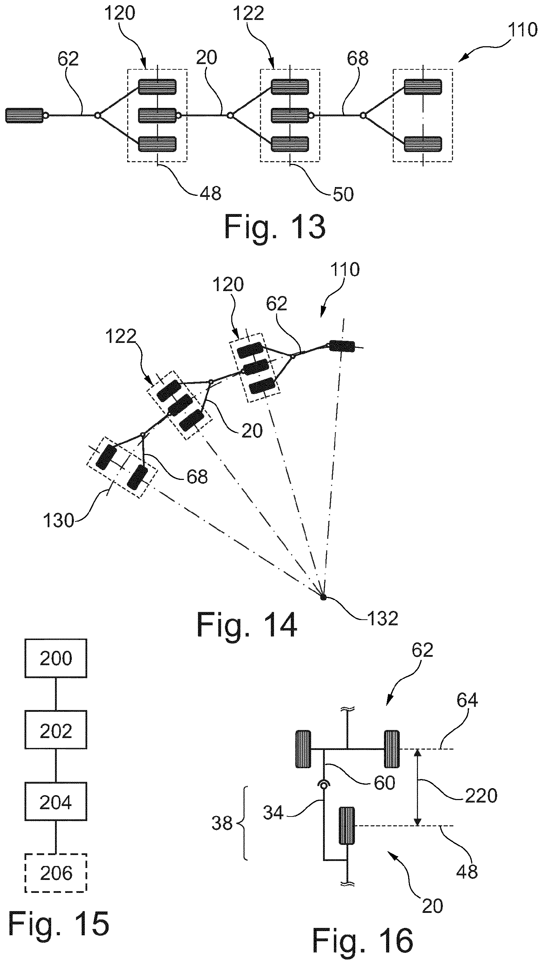

La commande de ce dispositif 32 est décrite plus en détail en référence à la figure 15.

Ici, le dispositif 32 comporte :

- une fourche 90 attachée à la roue 42,
- une colonne de direction 91, et
- le volant 23 joint, sans degré de liberté en rotation, à la colonne 91.

Cette fourche 90 comporte une barre de direction 92 qui se scinde, à son extrémité inférieure, en deux branches 93 et 95. Les branches 93 et 95 sont fixées à la barre 92. Ici, la colonne 91 est également fixée à la barre 92. Les extrémités inférieures des branches 93, 95 sont reliées mécaniquement à un moyeu 94 de la roue 42 de façon à permettre la rotation de la roue 42 autour de son axe de roulement. Le dispositif 32 comporte ici un palier 96 relié mécaniquement sans aucun degré de liberté à la partie 24 du châssis du véhicule 20. La barre 92 pivote à l'intérieur de ce palier, ici selon un axe de rotation du palier 96, de façon à permettre la rotation de la roue 42.

La figure 10 représente également un exemple de réalisation d'un dispositif 34A de maintien de l'angle de braquage de la roue 42 à sa valeur nulle lorsque l'attelage 34 est dans sa position attelée. En effet, lorsque le véhicule 20 est attaché au véhicule 62, l'axe de roulement de la roue 42 est maintenu parallèle à l'axe de roulement des roues du train arrière du véhicule 62. Dans le cas où le train avant du véhicule 20 comporte une seule roue 42, cela revient à maintenir les axes transversaux 48 et 64 parallèles entre eux tant que ces véhicules 20 et 62 sont attachés. Par exemple, les attelages 34 et 60 maintiennent les axes longitudinaux respectifs des parties 24 et arrière du véhicule 62 alignés entre eux. La roue 42 est amenée en alignement avec l'axe 47 jusqu'à ce que l'angle de braquage φ soit nul. Les axes 48 et 64 sont alors alignés parallèlement entre eux.

Dans cet exemple de réalisation, le dispositif 34A est apte à braquer automatiquement la roue 42, pour que l'angle de braquage devienne nul (et donc que l'axe transversal 48 devienne parallèle à l'axe transversal 64), puis à verrouiller la roue 42 dans cette position tant que l'attelage 34 est dans sa position attelée. Dans cet exemple, le dispositif 34A comporte à cet effet :

- un dispositif de verrouillage 97A commandable,
- un capteur 97B de la position de l'attelage 34,
- un actionneur électrique 97C commandable, apte à braquer la roue 42 jusqu'à sa position où son angle de braquage est nul, et
- une unité 97D de pilotage de l'actionneur 97C et du verrou 97A en fonction des informations délivrées par le capteur 97B.

Ici, l'actionneur 97C comporte également un capteur 97E de mesure de l'angle de braquage φ, apte à communiquer avec l'unité 97D pour fournir la valeur de cet angle φ.

Le dispositif 97A est ici un verrou électrique commandable. Ce dispositif 97A sera donc ici par la suite nommé « verrou ». Le verrou 97A est configuré pour empêcher l'actionnement du dispositif 32 par le conducteur lorsque l'attelage 34 du véhicule 20 est dans sa position attelée. A cet effet, ce verrou 97A est déplaçable entre :

- une position verrouillée dans laquelle il empêche la rotation de la colonne de direction 91, et
- une position déverrouillée dans laquelle la colonne 91 peut être déplacée par le conducteur pour braquer la roue 42.

Le capteur 97B détecte les positions attelée et dételée de l'attelage 34 et délivre cette information aux unités 33A et 97D de pilotage. Le fonctionnement du dispositif 34A est décrit plus en détail en référence à la figure 15.

Avantageusement, le dispositif 32 présente un déport de chasse D inférieur, en valeur absolue, à la plus petite distance séparant l'axe 39 de l'axe 48 lorsque les axes 48 et 50 sont parallèles. Ce déport de chasse est ici, en valeur absolue, trois fois ou dix fois inférieur à cette plus petite distance et, de préférence, vingt fois inférieur à cette distance.

Par déport de chasse, on désigne la distance algébrique entre :

- le centre géométrique de la surface de contact entre la route 22 et la roue 42, et
- la projection, dans le plan de roulement, de l'axe de rotation du dispositif 96.

Ici, ce déport de chasse D est obtenu en choisissant un angle de chasse α (« caster angle » en langue anglaise) dont la valeur absolue est inférieure à 15° ou à 10° et supérieure à 0°. La figure 11 représente plus en détail cet angle de chasse α. Ici, cet angle de chasse α est positif. Du fait de la valeur réduite du déport de chasse D, un effort mécanique moindre est requis pour braquer la roue 42 du train 38. La manoeuvrabilité du véhicule 20 est ainsi améliorée.

En actionnant le dispositif 32 indépendamment du dispositif 30, la manoeuvrabilité du véhicule 20 est accrue lorsque ce véhicule est attaché à un autre véhicule pour former un convoi routier. En particulier, le risque de mettre en accordéon un tel convoi routier lors d'un braquage sur place est réduit.

Avantageusement, lorsque le véhicule 20 est en tête d'un convoi routier comportant d'autres véhicules attachés entre eux, c'est-à-dire qu'il est situé à l'avant d'un de ces autres véhicules tout en n'étant pas lui-même attaché à l'arrière d'un autre véhicule, alors le rayon de braquage minimal du dispositif 32 (le dispositif d'articulation 30 de ce véhicule étant bloqué) est supérieur au rayon de braquage minimal autorisé par les dispositifs d'articulation respectifs des véhicules suiveurs (lorsque leurs dispositifs de direction 32 respectifs sont non braqués). Cette limitation est, par exemple, réalisée grâce aux butées 35 et 37 et à des butées disposées sur le dispositif 32. La limitation du rayon de braquage du dispositif 30 des véhicules suiveurs à une valeur inférieure à celle du rayon de braquage du dispositif 32 réduit le risque de blocage du dispositif 30 des véhicules suiveurs, même si ces véhicules suiveurs présentent des longueurs différentes.

Les figures 12 et 13 représentent un convoi routier 110 sur la route 22. Dans cet exemple, ce convoi 110 est formé des véhicules 20, 62 et 68 attachés entre eux deux à deux au moyen des attelages 34, 36, 60 et 66. Pour simplifier, le détail des véhicules du convoi 110 n'est pas illustré sur les figures 12 et 13. Ces véhicules 20, 62 et 68 sont ici alignés de façon rectiligne, de sorte que les axes longitudinaux respectifs de ces véhicules sont confondus. Les axes transversaux des trains avant et arrière de chacun des véhicules sont parallèles deux à deux. Le train arrière du véhicule 62 est ici complètement emboîté avec le train 38 du véhicule 20 (fig. 13). De même, le train avant du véhicule 68 est complètement emboîté avec le train 40 du véhicule 20. Ces trains emboîtés entre eux se comportent ainsi respectivement comme d'uniques trains de roues 120, 122 (figure 13). Le véhicule 62 est en tête du convoi 110, avec son attelage avant en position dételée. Par la suite, le véhicule 60 est qualifié de « véhicule de tête » du convoi. Les véhicules 20 et 68 sont qualifiés de « véhicules suiveurs ». Le dispositif 32 de ce véhicule 62 est commandable par le conducteur du véhicule 62, de façon à diriger le convoi 110. Le dispositif 30 du véhicule 62 est ici verrouillé par l'actionneur 33 et l'angle θ est maintenu à une valeur nulle, de sorte que les parties 24 et 26 du châssis soient alignées longitudinalement. Le dispositif 32 des véhicules suiveurs 20 et 68 n'est pas actionnable par les conducteurs respectifs de ces véhicules 20 et 68.

La figure 14 représente le convoi 110 selon une trajectoire courbe, par exemple lors d'une inscription du convoi 110 dans un virage.

Les centres géométriques des trains de roues respectifs de chaque véhicule suiveur du convoi 110 (dont, ici, les trains 120 et 122 et aussi le train de roues arrière du véhicule 68) suivent une même trajectoire 130. La trajectoire 130 est ici un arc de cercle de centre 132. Le centre 132 est le point vers lequel convergent ces axes transversaux respectifs des trains de roues des véhicules suiveurs du convoi 110. Les véhicules suiveurs 20 et 68 présentent un suivi monotrace par rapport au train 120 du véhicule 62 de tête, c'est à dire que les centres des trains de roues respectifs de chaque véhicule suiveur sont tous à une même distance du centre 132. Ce suivi monotrace est ici assuré par la conformation mécanique du dispositif 30, qui permet de maintenir la position de l'axe instantané de rotation de la partie 24 par rapport à la partie 26 :

- à équidistance des axes transversaux 48, 50 des trains de roues du véhicule, lorsque ces axes transversaux sont parallèles, et
- sur la bissectrice de l'angle aigu formé par ces axes transversaux 48, 50 lorsque ces axes transversaux ne sont pas parallèles et que les roues du véhicule 20 ne sont pas braquées.

De façon analogue à ce qui a été décrit en référence aux véhicules 62 et 20, les attelages 36 et 66 maintiennent les axes longitudinaux respectifs des parties 26 et avant du véhicule 68 alignés entre eux. La roue du train avant du véhicule 68 est maintenue alignée avec le train 40 du fait que son dispositif de direction est maintenu bloqué lorsque cette roue n'est pas braquée.

Un exemple d'un procédé de commande du véhicule 62 va maintenant être décrit, en référence à l'organigramme de la figure 15.

Initialement, on suppose que le véhicule 68 est détaché du véhicule 20. Lors d'une étape 200, le conducteur du véhicule 20 détache son véhicule du véhicule 62. Par exemple, pour cela, quand le véhicule 62 est à l'arrêt, le conducteur passe la marche arrière. En réponse, l'attelage 34 est automatiquement déplacé vers sa position dételée. Le capteur 97B du dispositif 34A détecte immédiatement ce passage dans la position dételée et transmet cette information aux unités 33A et 97D de pilotage. En réponse, l'unité 33A commande l'actionneur 33 pour ramener l'angle θ à la valeur zéro puis verrouille l'articulation 31 pour empêcher que les parties 24 et 26 pivotent l'une par rapport à l'autre autour de l'axe 39 tant que l'attelage 34 est dans sa position dételée. Uniquement ensuite, l'unité 97D commande le verrou 97A pour le faire passer de sa position verrouillée vers sa position déverrouillée. Le véhicule 20 peut dès lors être piloté par le conducteur à l'aide du volant 23. A l'issue de l'étape 200, chacun des véhicules 20, 62 et 68 est piloté et dirigé indépendamment, à l'aide de leur dispositif 32 respectif, par des conducteurs respectifs.

Lors d'une étape 202, le véhicule 20 est attaché à l'arrière du véhicule 62. Pour cela, alors que le véhicule 62 est à l'arrêt, le véhicule 20 est approché de l'arrière du véhicule 62 pour emboîter les attelages 34 et 60 l'un avec l'autre. Cela provoque automatiquement le passage des attelages 34 et 60 dans leur position attelée. Le capteur 97B du dispositif 34A du véhicule 20 détecte alors la position attelée et transmet immédiatement cette information aux unités 33A et 97D de pilotage. En réponse, l'unité 33A commande l'actionneur 33 pour libérer en rotation l'articulation 31. Dès lors, les parties 24 et 26 du véhicule 20 peuvent librement pivoter l'une par rapport à l'autre autour de l'axe 39. Dans le même temps, l'attelage avant du véhicule 62 reste dans sa position dételée. Ensuite, l'unité 97D commande l'actionneur 97C pour braquer automatiquement la roue 42 du train avant 38 dans une position où son angle de braquage est nul. Ensuite, l'unité 97D commande le déplacement du verrou 97A vers sa position verrouillée pour bloquer en rotation la colonne 91 de direction tant que l'attelage 34 est dans sa position attelée. Ainsi, le dispositif 32 de ce véhicule 20 ne peut plus être actionné par un conducteur du véhicule. Notamment, l'articulation du véhicule 62 est maintenue bloquée dans une position où son angle d'articulation est nul, tandis que son dispositif de direction est libre pour permettre le pilotage de ce véhicule 62. Le conducteur du véhicule 62 dirige le convoi ainsi formé à l'aide du volant 23 de ce véhicule.

Lors d'une étape 204, le véhicule 68 est attaché à l'arrière du véhicule 20 pour former le convoi 110. L'étape 204 est identique à l'étape 202 sauf qu'elle se déroule entre les véhicules 20 et 68. De plus, contrairement au véhicule 62 en tête du convoi 110, l'articulation 31 est maintenue libre, tandis que le dispositif 32 est maintenu dans un état non commandable par le conducteur du véhicule 20.

Ensuite, les véhicules du convoi 110 peuvent être détachés les uns des autres comme décrit lors de l'étape 200.

De nombreux autres modes de réalisation sont possibles. Par exemple, les roues du véhicule peuvent être réparties différemment. Ainsi, en variante, le train avant comporte au moins deux roues et le train arrière comporte une seule roue. Dans une autre variante, le véhicule 20 comporte plus de trois roues. Dans cette autre variante, chaque train comporte au moins deux roues. Le véhicule 20 peut aussi comporter des roulettes pivotantes libres de chasse positive (« jockey wheel », « caster wheel » ou « swivel wheel » en langue anglaise), fixées sur le châssis, mais n'appartenant pas aux trains avant et arrière. Ces roulettes ne sont notamment pas commandables par les dispositifs 30 et 32. La direction de ces roulettes s'aligne automatiquement sur celles de la trajectoire du véhicule car elles présentent un déport de chasse positif.

Le véhicule 20 peut présenter une forme différente de celle décrite. Par exemple, le véhicule 20 est un quadricycle comportant un seul siège de front. Le siège passager 25 peut être omis ou placé derrière le siège 21.

Le siège conducteur 21 peut aussi être fixé à l'habitacle 27 sans aucun degré de liberté. Il en va de même pour le siège passager 25. Ces sièges peuvent aussi être réglés suivant deux degrés de liberté.

Les véhicules formant le convoi 110 peuvent être différents les uns des autres. Par exemple, les véhicules peuvent présenter des longueurs différentes. Les trains avant et/ou arrière de deux de ces véhicules peuvent présenter des écartements différents. Ces véhicules peuvent comporter des nombres de roues distincts. Par exemple, certains véhicules comportent trois roues, d'autres quatre. Cependant, les attelages respectifs avant et arrière de ces véhicules sont identiques (ou, au moins, compatibles entre eux), pour faciliter l'attachement de ces véhicules deux à deux. Il est aussi possible d'attacher une remorque à un véhicule. Par exemple, cette remorque est identique au véhicule sauf qu'elle ne comporte pas de dispositif 32 de direction et que l'axe transversal du train avant est bloqué en permanence dans une position où il est parallèle à l'axe transversal du train arrière du véhicule auquel elle est attachée. De préférence, la remorque est dépourvue de siège pour laisser plus de place pour transporter des bagages.

La forme et/ou les dimensions de l'emplacement 86 sont adaptées dans le cas où deux véhicules attachés comportent des roues de diamètres différents.

Les trains de roues des véhicules peuvent ne pas être complètement emboîtés dans la position attelée. Dans ce cas, de préférence, des parties avant et arrière des véhicules attachés sont conformées pour que, dans la position attelée, les axes transversaux des trains arrière et avant, respectivement, des véhicules attachés soient séparés l'un de l'autre par une distance inférieure à la somme du rayon de la roue 42 (ou du rayon de la roue avant du véhicule suiveur lorsque les roues présentent des diamètres différents) et du rayon de la roue 44 ou 46. Dans une autre variante, cette distance peut être supérieure à la somme de ces rayons, comme illustré à la figure 16. Par exemple, le véhicule 20 est attaché à l'arrière du véhicule 62. L'axe transversal 64 du train arrière de roues du véhicule 62 est séparé de l'axe 48 par une distance (illustrée par la flèche 220) supérieure à la somme de ces rayons. Dans ce cas, les trains roulants sont dits être « en tandem ». De tels trains roulants en tandem sont, par exemple, ceux décrits dans le document US-3294418-A (T.A. MIDDLESWORTH ET AL) en référence aux figures 3 et 4 de ce document.

Dans le cas où ces trains ne sont pas complètement emboîtés dans la position attelée, le dispositif 32 peut en outre comporter un dispositif automatique de pilotage, configuré pour modifier l'angle de braquage des roues du train 24 en réponse à un signal de commande, uniquement lorsque ce véhicule est attaché à l'arrière d'un autre véhicule.

L'articulation 31 peut être réalisée différemment. Par exemple, l'articulation 31 est remplacée par une rotule.

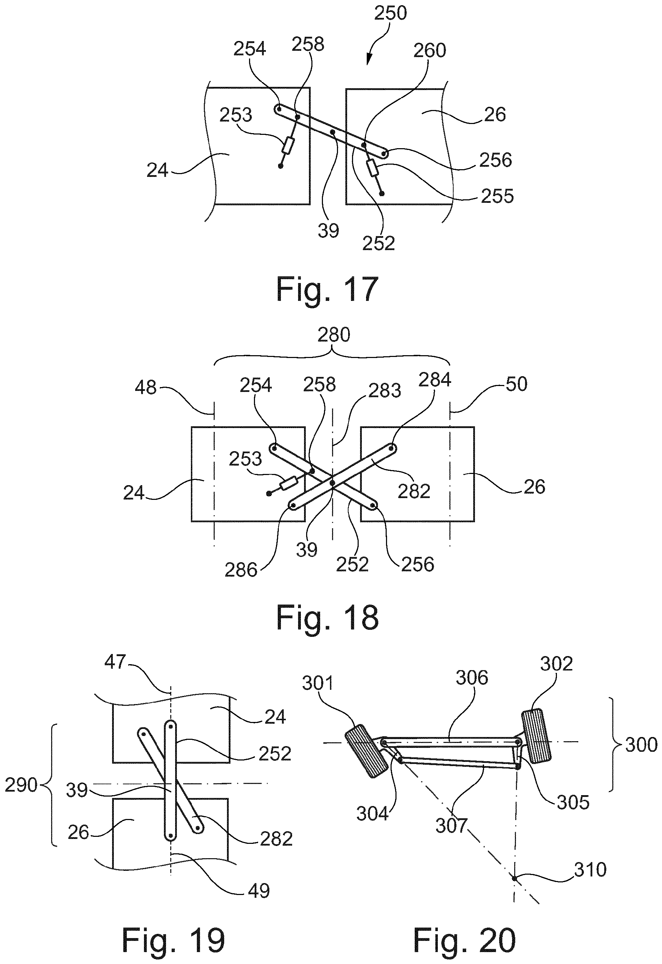

La figure 17 représente un dispositif 250 apte à être utilisé en lieu et place du dispositif 30. Ce dispositif 250 comporte une poutre 252 et des actionneurs 253, 255 qui remplacent l'actionneur 33. Cette poutre 252 s'étend, parallèlement au plan de roulement du véhicule 20, entre deux extrémités respectivement ancrées aux parties 24 et 26 par des points d'ancrage 254 et 256. L'actionneur 253 s'étend entre la partie 24 et un point d'ancrage 258 sur la poutre 252. De même, l'actionneur 255 s'étend entre la partie 26 et un point d'ancrage 260 sur la poutre 252. Chaque point d'ancrage 254, 256, 258 et 260 comporte une liaison pivot, dont l'axe de rotation est perpendiculaire au plan de roulement. L'unité 33A est modifiée pour commander les actionneurs 253 et 255 de manière à modifier l'angle θ de la même façon que ce qui a été décrit dans le cas du dispositif 30. Le procédé de commande du véhicule comportant ce dispositif 250 comporte ici les étapes 200 à 204 et, avantageusement, une étape 206. Lors de cette étape 206, postérieure à l'étape 204 et consécutive au déplacement du véhicule, les actionneurs 253, 255 sont commandés de façon à maintenir l'axe instantané de rotation des parties 24 et 26 l'une par rapport à l'autre :

- à équidistance des axes transversaux 48, 50 des trains de roues du véhicule, lorsque ces axes transversaux sont parallèles, et

- sur la bissectrice de l'angle aigu formé par ces axes transversaux 48, 50 lorsque ces axes transversaux ne sont pas parallèles et que les roues du véhicule 20 ne sont pas braquées.

En variante, cette poutre 252 est alignée parallèlement aux axes 47 et 49 des parties, respectivement, 24 et 26 du véhicule 20 lorsque ces parties sont alignées. Un point milieu des points d'ancrage 254 et 256 est placé de façon équidistante des axes transversaux 48 et 50. On définit un plan vertical passant par ce point milieu et étant équidistant des points 254 et 256. Les actionneurs 253, 255, leurs points d'ancrage respectifs ainsi que les points 258 et 260 sont symétriques deux à deux par rapport à ce plan vertical. Ces actionneurs 253 et 255 sont gouvernés par une même loi de commande et présentent une même course.- Alors l'axe 39 est l'axe vertical passant par le point milieu. Ainsi, le véhicule 20 est apte à présenter une trajectoire monotrace lorsqu'il est compris dans un convoi routier en tant que véhicule suiveur.

La figure 18 représente un dispositif 280 de direction apte à être utilisé en lieu et place des dispositifs 30 ou 250. Ce dispositif est identique au dispositif 250, sauf que :

- l'actionneur 255 est omis, et
- une seconde poutre 282 est ajoutée.
- les poutres 252 et 258 ne sont pas alignées par rapport à l'axe longitudinal du véhicule 20.

En vue de dessus, la poutre 282 croise la poutre 252 au niveau de l'axe instantané de rotation 39 de la partie 24 par rapport à la partie 26. Ces deux poutres 252 et 282 présentent désormais une symétrie de réflexion par rapport à un plan vertical 283, passant par l'axe 39 et perpendiculaire à l'axe longitudinal du véhicule 20, lorsque les deux parties de châssis sont alignées. Les deux poutres ne sont cependant pas reliées mécaniquement au niveau de cet axe 39. Par exemple, la poutre 282 est identique à la poutre 252 sauf que ses extrémités sont respectivement reliées mécaniquement aux parties 24 et 26 du châssis du véhicule 20 par des points d'ancrage 284 et 286. Les points d'ancrage 284, 286 sont identiques aux points 254 et 256 sauf qu'ils sont positionnés de manière à ce que la poutre 282 croise la poutre 252 comme décrit ci-dessus. L'axe 39 est préférentiellement situé à équidistance des axes 48 et 50 du véhicule. Ainsi, le véhicule 20 est apte à présenter une trajectoire monotrace lorsqu'il est compris dans un convoi routier en tant que véhicule suiveur.

L'actionneur 253 peut également être omis.

La figure 19 représente un dispositif d'articulation 290 apte à remplacer l'un des dispositifs 30, 250 ou 280. Ce dispositif 290 est identique au dispositif 280, à la différence que :

- les poutres 252 et 282 sont disposées de façon à ce que la poutre 252 soit parallèle aux axes 47 et 49 lorsque les parties 24 et 26 sont alignées ;
- l'actionneur 253 est omis.

L'axe 39 est l'axe vertical situé au point de croisement des deux poutres. Cependant, même si cet axe 39 est disposé de façon équidistante des axes 48 et 50 lorsque les parties 24 et 26 sont alignées longitudinalement, la conformation de ce dispositif 290 ne permet pas de maintenir l'axe instantané de rotation sur la médiatrice des deux axes transversaux aux trains roulants adjacents des lors que les angles d'articulation ne sont plus nuls. Ce dispositif engendre donc une dérive du caractère monotrace du véhicule 20 qui n'est plus apte à présenter une trajectoire monotrace lorsqu'il est compris dans un convoi routier en tant que véhicule suiveur

L'articulation 31 peut être placée n'importe où entre des plans verticaux passant, respectivement, par les axes transversaux 48 et 50. En particulier, il est possible de disposer l'articulation 31 dans l'un des plans passant par les axes 48 et 50. Dans ce cas, l'axe instantané de rotation n'est plus équidistant des deux axes transversaux. Le convoi 110 n'est alors pas monotrace.

Le dispositif 32 peut être différent, notamment lorsque le train 38 comporte plus d'une roue. Par exemple, la figure 20 représente un dispositif de direction 300 apte à remplacer le dispositif 32 lorsque le train 38 comporte deux roues 301, 302. Ce dispositif 300 comporte une direction automobile selon la géométrie dite d'Ackermann (« Ackermann steering » en langue anglaise). A cet effet, ce dispositif 300 comporte :

- des porte-fusées 304, 305, respectivement reliées aux roues 301 et 302 et présentant chacune un levier de direction,
- une poutre 306, fixée sans aucun degré de liberté en rotation en lacet à la partie 24 du châssis et reliée mécaniquement aux leviers de direction des porte-fusées 304 et 305 par des liaisons pivot de manière à ce que ces porte-fusées 304 et 305 puissent pivoter autour des axes de pivot respectifs des roues, et
- une barre 307, reliée mécaniquement aux leviers de direction.

On définit l'axe de pivot d'une roue comme étant l'axe autour duquel pivote la roue lorsqu'elle est braquée, cet axe de pivot étant solidaire sans degré de liberté de la partie de châssis auquel le train de roues dont fait partie la roue est attaché. Cet axe de pivot est typiquement vertical, à 2° ou 3° ou 5° ou 10° près.

Cette direction 300 est configurée pour ce que le point de focalisation 310 des leviers de direction soit placé entre des plans verticaux parallèles passant respectivement par les axes 70 (du véhicule suiveur) et 39 et, de préférence, entre les axes 50 et 39. Cette direction 300 comporte, par exemple, une direction automobile à crémaillère (non représentée sur la figure 18).

Dans une autre variante, le dispositif 32 comporte une direction dite de « type diligence », dans laquelle les trains de roues sont reliées aux châssis par un essieu apte à pivoter autour d'une cheville ouvrière verticale (« kingpin » en langue anglaise).

Dans le cas où le train avant comporte plus d'une roue, l'angle de braquage φ est défini, pour l'ensemble des roues de ce train avant, comme étant l'angle aigu formé entre un plan vertical comportant l'axe longitudinal 47 de la partie 24 et un plan de braquage. Ce plan de braquage est défini comme étant :

- le plan équidistant au plans respectifs des roues lorsque ces roues sont parallèles, et
- le plan vertical formant un plan bissecteur entre les plans des roues de ce train lorsque ces roues ne sont pas parallèles (ce qui est par exemple le cas des roues dans le dispositif 300 lorsque ces roues sont braquées), ces plans de roue présentant donc une intersection entre eux.

Le plan d'une roue est le plan vertical perpendiculaire à la projection orthogonale de l'axe de roulement d'une roue sur le plan de roulement et passant par le centre géométrique de la surface de contact entre cette roue et le plan de roulement. Dans ces exemples, les roues du train avant présentent des angles de carrossage et de pincement nuls. Les roues s'étendent donc perpendiculairement au plan de roulement. L'homme du métier sait bien qu'en variante, ces angles de carrossage et/ou de pincement peuvent être non nuls. Dans le cas où l'angle de pincement n'est pas nul, les plans de roues sont définis comme étant les plans selon lesquels les roues seraient alignées si l'angle de pincement était nul.

Le dispositif 32 peut aussi être remplacé par un dispositif électronique de direction comportant un actionneur électrique apte à braquer chaque roue avant. Par exemple, cet actionneur électrique est commandé par le conducteur au travers d'une interface homme-machine. L'interface homme-machine peut comporter le volant 23 associé à un capteur de la position angulaire de ce volant. Dans ce cas, la colonne de direction est omise et remplacée par une unité de commande qui commande l'actionneur électrique en fonction de l'angle mesuré par le capteur.

En variante, l'une ou l'autre des branches 93 ou 95 est omise.

Dans la position dételée, il est aussi possible de prévoir que les dispositifs 30 et 32 soient, par exemple simultanément, utilisés. Ainsi, quand le conducteur tourne le volant 23 cela provoque une rotation de la colonne 91 de direction et, en même temps, une commande de l'actionneur 33 pour modifier l'angle θ d'articulation. L'utilisation conjointe des dispositifs 30 et 32 lorsque le véhicule 20 est détaché de tout autre véhicule permet d'augmenter son angle maximal de braquage.

L'angle de chasse α du dispositif 32 peut être nul ou négatif. Le dispositif 32 peut également présenter un déport de chasse additionnel causé par un désalignement de l'axe de rotation du dispositif 96 par rapport au centre de cette roue 42.

Le mécanisme 31C peut être omis. Dans ce cas, l'unité 33A est également omise. Le dispositif 30 peut alors être laissé libre pour le véhicule en tête du convoi 110. Les étapes 200 à 204 du procédé sont alors modifiées.

Le mécanisme 31C peut ne pas comporter l'actionneur 33. Cet actionneur 33 peut par exemple être remplacé par une paire de mâchoires, solidaires de la partie 24 et aptes à enserrer l'arbre 51 pour empêcher la rotation des parties 24 et 26 l'une par rapport à l'autre lorsque le mécanisme 31C est dans la position verrouillée.

Le dispositif 34A de maintien peut être réalisé différemment. Par exemple, dans un cas simplifié, l'angle de chasse α de la roue 42 est positif et la fourche 90 est maintenue libre en rotation dans le palier 96. Dans ces conditions, l'angle de braquage s'annule automatiquement dès lors que le convoi se déplace à cause de la valeur de l'angle de chasse α choisie. Dans ce mode de réalisation, le verrou 97A est remplacé par un mécanisme qui désolidarise la colonne 91 de direction de la fourche 90. Ainsi, le conducteur peut toujours tourner le volant 23 dans la position attelée mais cela n'a aucun effet sur la direction de la roue 42. Un tel mécanisme de désolidarisation peut aussi être utilisé en complément du verrou 97A dans les modes de réalisation décrit ici.

Le dispositif 34A peut aussi être un dispositif purement mécanique. Par exemple, en variante, le dispositif de maintien comporte des guides solidaires du train arrière ou du châssis du véhicule 62. Ces guides sont aptes à redresser la roue 42 lorsque l'attelage 34 s'enfonce à l'intérieur de l'attelage 60. Par exemple, ces guides reçoivent à coulissement des extrémités de la fusée 94 pour redresser la roue 42 lorsque l'attelage 34 s'enfonce à l'intérieur de l'attelage 60. Avantageusement, les mêmes guides empêchent le braquage de la roue 42 tant que les attelages 34 et 60 sont dans la position attelée pour remplir la même fonction que le verrou 97A. On remarquera que dans cette variante, le dispositif de maintien de l'angle de braquage de la roue 42 du véhicule 20 à sa valeur nulle est en partie ou en totalité logé sur le véhicule 62 et non pas sur le véhicule 20.

Les différentes variantes du dispositif 34A décrites ici peuvent aisément être transposées au cas d'un train avant comportant plusieurs roues.

Les attelages 34 et/ou 60 peuvent être réalisés différemment. Par exemple, en variante, l'attelage 34 comporte des crochets et l'attelage 60 comportent des barres ou des anneaux sur lesquels les crochets viennent se prendre dans la position attelée pour attacher les deux véhicules. Par exemple, les attelages 34, 60 forment un attelage trois points tel que celui utilisé pour atteler une remorque à un tracteur.

Les attelages 34 et 60 ne sont pas nécessairement fixés directement sur les parties 24 et 26 de châssis. Par exemple, l'un ou l'autre des attelages 34 et 60 est directement fixé sur le train de roues. Les deux attelages 34, 60 peuvent aussi être fixés directement sur les trains de roues.

En variante, les attelages 34 et 60 sont configurés pour que, dans l'état attelé, la roue 42 soit alignée avec l'axe 47 par encastrement dans le train arrière de roues du véhicule 62.

Les roues 42, 44 et 46 ne comportent pas forcément de pneumatiques.

En variante, les centres des trains roulant d'un même véhicule peuvent ne pas être alignés longitudinalement.

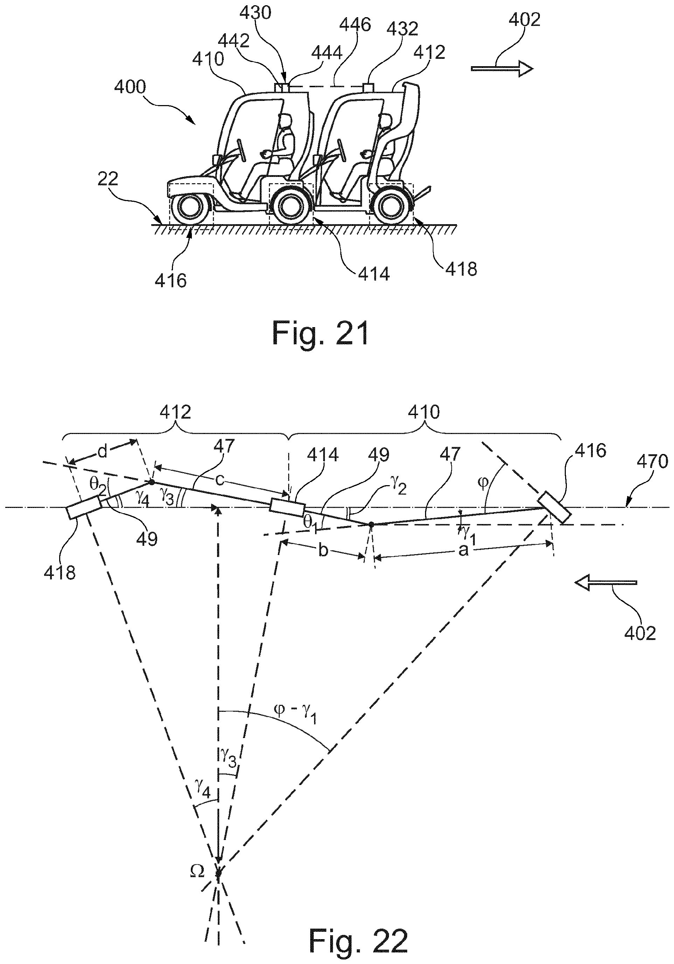

La figure 21 représente un convoi automobile routier 400 pour lequel un braquage en marche arrière est facilité. Par marche arrière, on désigne un déplacement du convoi essentiellement selon une direction de sens opposé au sens de déplacement du même convoi en marche avant. La direction de déplacement en marche arrière est ici représentée par une flèche 402.

Le convoi 400 est formé de deux véhicules automobiles routiers attelables 410 et 412 attachés entre eux. Dans cette description, par convention, on se place par rapport à la direction de déplacement du convoi en marche avant pour définir lequel des véhicules du convoi 400 est en tête du convoi. Il en va de même pour qualifier l'« avant » ou l'« arrière » du convoi 400 ou d'éléments constitutifs de ce convoi 400. Le véhicule 410 est ici placé en tête du convoi 400. Le véhicule 412 est ici placé à l'arrière, ou en queue, du convoi 400.

Le véhicule 410 est identique au véhicule 20, sauf que le véhicule 410 comporte en outre une unité de commande 430, qui sera décrite plus en détails dans ce qui suit.

Les véhicules 410 et 412 sont ici identiques.

Pour simplifier, seul le véhicule 410 sera décrit en détail. L'exemplaire de l'unité 430 appartenant au véhicule 412 porte ici la référence 432.

Les véhicules 410 et 412 sont ici attachés entre eux au moyen de leurs attelages, respectivement, arrière et avant. Les trains de roues, respectivement, arrière et avant des véhicules 410 et 412 sont ici emboîtés l'un dans l'autre et forment un train de roues équivalent 414, dit « train milieu ». Dans cet exemple, lesdits trains de roues arrière et avant des véhicules 410 et 412 sont donc confondus en un unique train de roues et on fera indifféremment référence à l'un ou à l'autre sous la référence 414 lorsque les véhicules 410 et 412 sont attachés pour former le convoi. Ici, le train avant de roues du véhicule 410 porte la référence 416 et le train arrière de roues du véhicule 412 porte la référence 418.

Avantageusement, le train 416 présente un déport de chasse inférieur, en valeur absolue, à dix ou à vingt fois la longueur de la partie 24 du véhicule 410 (notée ci-après longueur a). Cela permet de limiter le risque que la partie 24 du véhicule 410 présente une rotation en lacet importante autour de l'axe 39 du véhicule 410 lorsque les roues du train 416 sont braquées alors que le convoi 400 est immobile ou se déplace à vitesse réduite. Ce qu'est la longueur de la partie 24 sera défini dans ce qui suit.

Le convoi 400 est dit être dans une position alignée lorsque les parties 24 et 26 respectives des véhicules 410 et 412 sont toutes alignées entre elles et lorsque les roues du train avant ne sont pas braquées. Plus précisément, le convoi est dit être dans la position alignée si les angles $\theta_1$ et $\theta_2$ et $\varphi$ sont tous inférieurs à 10° ou à 5° ou à 2°. On notera ici respectivement $\theta_1$ et $\theta_2$ les angles d'articulation des dispositifs d'articulation 30 des véhicules 410 et 412.

L'unité 430 est programmée pour, lorsque le convoi effectue une marche arrière depuis la position alignée et que le véhicule auquel elle appartient est en tête du convoi 400, asservir les angles $\theta_1$ et $\theta_2$ des véhicules 410 et 412 à des valeurs de consigne $c\theta_1$ et $c\theta_2$ respectivement calculées, à chaque instant, en fonction de l'angle $\varphi$ de braquage du train avant de roues du véhicule 410. La définition des valeurs de consigne $c\theta_1$ et $c\theta_2$ sera décrite plus en détails dans ce qui suit.

Comme indiqué précédemment, chaque dispositif d'articulation 30 comporte un actionneur 33 ici apte à déplacer les parties 24 et 26 pour obtenir une valeur prédéterminée (ou valeur de consigne) de leur angle d'articulation $\theta_1$ ou $\theta_2$ respectif, puis de maintenir cet angle à cette valeur de consigne tant qu'une nouvelle commande n'est pas reçue. Par exemple, ce déplacement et ce maintien sont réalisés par asservissement de l'angle d'articulation à la valeur de consigne obtenue. A cet effet, l'unité 33A est programmée pour commander l'actionneur 33 en fonction de la valeur de consigne et de l'angle mesuré par le capteur 33B de sorte que le dispositif 30 présente un angle d'articulation $\theta_1$ ou $\theta_2$ égal à cette valeur de consigne. L'unité 33A comporte ici à cet effet un régulateur de type PID.

L'unité 430 est donc programmée pour :

- mesurer l'angle $\varphi$ de braquage du train avant de roues du véhicule 410, ici au moyen du capteur 97E du dispositif 34A ;

- calculer, en fonction de l'angle $\varphi$ mesuré, des valeurs de consignes, notées respectivement $c\theta_1$ et $c\theta_2$, pour, respectivement, les angles $\theta_1$ et $\theta_2$ ;
- délivrer aux dispositifs d'articulation 30 respectifs des véhicules 410 et 412 les valeurs de consigne calculées.

A cet effet, l'unité 430 comporte :

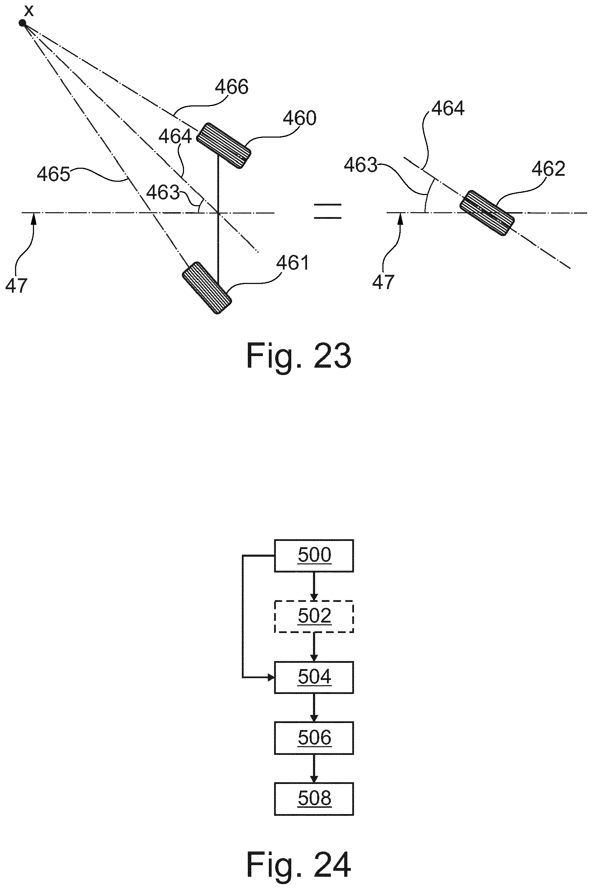

- un dispositif de calcul 442 programmé pour exécuter le procédé de la figure 24 ;
- une interface 444 d'échange de données, apte à :

  • collecter un signal de données fourni par le capteur 97E ;
  • délivrer un signal de données à destination des dispositifs 30 des véhicules 410 et 412 formant le convoi 400.

L'interface 444 est raccordée au dispositif 30 et au capteur 97E du véhicule 410, par exemple, par des liaisons filaires. L'interface 444 est également raccordée à l'unité 432 par, par exemple, une liaison sans fil 446.

Le dispositif 442 comporte ici un calculateur électronique, tel qu'un microprocesseur.

Les valeurs de consigne $c\theta_1$ et $c\theta_2$ sont choisies de façon à ce que, lors d'un déplacement du convoi 400 en marche arrière, par exemple depuis la position alignée du convoi représentée sur la figure 21, les axes transversaux des trains de roues 414, 416 et 418 se coupent en permanence en un même centre $\Omega$ instantané de rotation du convoi 400.

La figure 22 représente plus en détail les paramètres dimensionnels utilisés pour définir les valeurs de consigne $c\theta_1$ et $c\theta_2$. Plus précisément, la figure 22 représente schématiquement les véhicules 410 et 412. Pour simplifier, les trains de roues sont représentés graphiquement sur la figure 22 par une unique roue. La convention de représentation graphique des trains de roues et de définition de l'angle de braquage des roues du train avant est schématisée sur la figure 23. Ici, on considère que deux roues 460 et 461 d'un train avant sont équivalentes à une unique roue 462. L'angle de braquage 463 de cette roue 462 est alors défini comme l'angle formé entre l'axe longitudinal 47 et la droite 464 reliant le centre géométrique du train avant au point de focalisation X. Ce qu'est un point de focalisation est défini en référence à la figure 20.

On définit les paramètres dimensionnels suivants pour le convoi 400 (figure 22) :

- $\gamma 1$ est l'angle entre l'axe 47 de la partie 24 du véhicule 410 et l'axe initial 470 suivant lequel le convoi est aligné lorsqu'il est dans la position d'alignement ;
- $\gamma 2$ est l'angle entre l'axe 49 de la partie 26 du véhicule 410 et l'axe initial 470 ;
- $\gamma 3$ est l'angle entre l'axe 47 de la partie 24 du véhicule 412 et l'axe initial 470 ;
- $\gamma 4$ est l'angle entre l'axe 49 de la partie 26 du véhicule 412 et l'axe initial 470 ;
- $\Omega$ est le centre instantané de rotation défini par les essieux des trains 414 et 418 du convoi 400, ce centre instantané étant donné par le point d'intersection des axes transversaux respectifs des trains 414 et 418 ;
- a et c sont respectivement les longueurs des parties 24 des véhicules 410 et 412, mesurées chacune le long de l'axe longitudinal 47 de cette partie 24, entre l'axe 39 de l'articulation 30 et le centre du train avant de ce véhicule ;
- b et d sont respectivement les longueurs des parties 26 des véhicules 410 et 412, mesurées chacune le long de l'axe longitudinal 49 de cette partie 26, entre l'axe 39 de l'articulation 30 et le centre du train arrière de ce véhicule.

Les distances sont ici toutes mesurées dans un plan parallèle au plan de roulement du convoi.

Dans cet exemple, les véhicules 410 et 412 sont identiques et donc les longueurs a et b sont égales, respectivement aux longueurs c et d. Cependant, les notations et les formules qui seront décrites dans ce qui suit sont valables dans le cas général où les véhicules 410 et 412 ne sont pas identiques et que les valeurs de a, b, c, d sont différentes.

De façon générale, les valeurs de consigne sont choisies pour que la trajectoire suivie par le centre géométrique du train 416 soit tangente au cercle de giration centré sur le centre instantané de rotation $\Omega$. Ceci facilite notamment l'absence de ripage du train avant lors d'un braquage sur place. La position du centre $\Omega$ est définie par l'intersection des axes transversaux des trains 414 et 418. Par la suite, on nommera condition d'optimalité cette condition.

On définit ici un système de coordonnées cartésiennes en prenant pour origine la position initiale du centre géométrique du train 418 avant le déplacement en marche arrière du convoi 400 et en prenant :

- pour axe d'abscisses l'axe 470, et
- pour axe d'ordonnées un axe perpendiculaire à l'axe 470 et parallèle au plan de la route.

Avec ces conventions, le centre $\Omega$ est défini par les relations suivantes : $\overline{\Omega AR}.\overline{TAR} = 0$ et $\overline{\Omega MI}.\overline{TMI} = 0$, où :

- le point AR est le centre géométrique du train 418 ;
- $\overline{TAR}$ est le vecteur tangent à la trajectoire du centre géométrique du train 418 et ayant pour origine le point AR , lors d'une manoeuvre de braquage sur place ;
- le point MI est le centre géométrique du train 414 ;
- $\overline{TMI}$ est le vecteur tangent à la trajectoire du centre géométrique du train 414 et ayant pour origine le point MI, lors d'une manoeuvre de braquage sur place ;
- $\overline{\Omega AR}$ et $\overline{\Omega MI}$ sont les vecteurs reliant le centre $\Omega$ au point, respectivement, AR et MI.

Lors d'un déplacement du convoi 400, le point AR a dans ce repère les coordonnées $x_{AR}$ et $y_{AR}$ définies comme suit :

$$x_{AR} = d \times \left(1 - \cos\left(\gamma_4\right)\right)$$

$$y_{AR} = \frac{d}{2} \times \ln\left(\frac{1 + \sin\left(\gamma_4\right)}{1 - \sin\left(\gamma_4\right)}\right) - d \times \sin\left(\gamma_4\right)$$

avec :

$$\gamma_4 = asin\left(\frac{\left(\frac{1 + \sin\left(\gamma_3\right)}{1 - \sin\left(\gamma_3\right)}\right)^{\frac{c}{d}} - 1}{\left(\frac{1 + \sin\left(\gamma_3\right)}{1 - \sin\left(\gamma_3\right)}\right)^{\frac{c}{d}} + 1}\right)$$

De même, lors d'un déplacement du convoi 400, le point MI a dans ce repère les coordonnées $x_{MI}$ et $y_{MI}$ définies comme suit :

$$x_{MI} = d + c \times \cos\left(\gamma_3\right)$$

$$y_{MI} = \frac{c}{2} \times \ln\left(\frac{1 + \sin\left(\gamma_3\right)}{1 - \sin\left(\gamma_3\right)}\right) - c \times \sin\left(\gamma_3\right)$$

Les vecteurs $\overline{TAR}$ et $\overline{TMI}$ ont pour valeur :

$$\overrightarrow{TAR} = \begin{pmatrix} \cos\left(\gamma_4\right) \\ \sin\left(\gamma_4\right) \end{pmatrix} \qquad \overrightarrow{TMI} = \begin{pmatrix} -\cos\left(\gamma_3\right) \\ \sin\left(\gamma_3\right) \end{pmatrix}$$

La condition d'optimalité se traduit alors par l'équation suivante :

$$\overrightarrow{\Omega AV} \cdot \overrightarrow{TAV} = 0$$

où :

- le point AV est le centre géométrique du train 416 ;
- $\overline{TAV}$ est le vecteur tangent à la trajectoire décrite par le centre géométrique du train 416 et ayant pour origine le point AV, lors d'une manoeuvre de braquage sur place ;
- $\overline{\Omega AV}$ est le vecteur reliant le centre $\Omega$ au point AV.

Dans cet exemple, le vecteur $\overline{TAV}$ se note de la façon suivante :

$$\overrightarrow{TAV} = \begin{pmatrix} -(c+b) \times \sin(\gamma_3) - a \times \cos(\gamma_1) \times \dfrac{d\gamma_1}{d\gamma_3} \\[2em] \dfrac{c \times sin^2(\gamma_3)}{\cos(\gamma_3)} - b \times \cos(\gamma_3) + a \times \cos(\gamma_1) \times \dfrac{d\gamma_1}{d\gamma_3} \end{pmatrix}$$

La condition d'optimalité permet ainsi d'établir une équation différentielle permettant de définir l'angle $\gamma1$ en fonction de l'angle $\gamma3$. Cette équation différentielle est intégrable en fonction de la condition initiale $\gamma1(\gamma3=0) = 0$, qui correspond à la condition d'alignement du convoi 400.

L'angle $\varphi$ est alors défini par la relation suivante :

$$\varphi = -atan \left( \dfrac{\dfrac{c \times sin^2(\gamma_3)}{\cos(\gamma_3)} - b \times \cos(\gamma_3) + a \times \cos(\gamma_1) \times \dfrac{d\gamma_1}{d\gamma_3}}{-(c+b) \times \sin(\gamma_3) - a \times \cos(\gamma_1) \times \dfrac{d\gamma_1}{d\gamma_3}} \right) + \gamma_1$$

En prenant pour hypothèse que les angles $\gamma1$, $\varphi$ et $\gamma2$ sont petits, cette équation différentielle peut être résolue de façon approximée. On obtient alors les approximations suivantes, car dans ce cas les angles $\gamma1$ à $\gamma4$ sont eux aussi petits :

- $\gamma2 = \gamma3$ ;
- $\gamma4 = \gamma3*c/d$ ;
- $b*\gamma2 = a*\gamma1$.

La résolution de cette équation dans ces conditions aboutit à la solution suivante :

- $\theta_1$ est égale à $\varphi*[d*(a+b)]/[a*d+a*b+a^2+b*d]$ et
- $\theta_2$ est égale à $\varphi*[a*(c+d)]/[a*d+a*b+a^2+b*d]$.

Les valeurs des consignes $c\theta_1$ et $c\theta_2$ sont donc ici choisies égales à, respectivement, $\varphi*[d*(a+b)]/[a*d+a*b+a^2+b*d]$ et $\varphi*[a*(c+d)]/[a*d+a*b+a^2+b*d]$. Dans ces conditions, en asservissant les angles $\theta_1$ et $\theta_2$ à ces valeurs de consigne, respectivement, $c\theta_1$ et $c\theta_2$ lors d'un braquage sur place ou en marche arrière, la trajectoire du train 416 est centrée sur le centre instantané de rotation $\Omega$ des trains 414 et 418.

Ainsi, le convoi 400 se conduit en marche arrière de façon simplifiée, dans la mesure où tous les trains de roues du convoi 400 ont une trajectoire centrée sur le même centre instantané de rotation $\Omega$, comme c'est le cas pour un véhicule automobile standard à deux essieux et dépourvu de dispositif d'articulation 30. Cette configuration réduit, voire supprime aussi l'inconvénient de la mise en portefeuille par rapport au reste du convoi que présenterait naturellement en marche arrière le train 418, en raison de son déport de chasse négatif, si les dispositifs 30 des véhicules 410 et 412 étaient libres de se mouvoir sans asservissement. La marche arrière du convoi 400 est ainsi facilitée, car le convoi 400 présente ainsi un risque moindre de se mettre en accordéon lors d'un braquage des roues du train 416, que ce braquage soit réalisé sur place ou pendant un déplacement en marche arrière. De plus, cet avantage est atteint sans qu'il soit nécessaire de faire riper les roues sur la route, c'est-à-dire sans avoir à faire glisser les roues perpendiculairement à leur trajectoire. On limite ainsi l'usure des pneumatiques des roues.

Dans cet exemple, la valeur de $\varphi$ est de préférence limitée au sein d'un intervalle prédéfini. Par exemple, la valeur de $\varphi$ est, en valeur absolue, inférieure ou égale à 20° ou à 15° ou à 10°.

Le calcul de $c\theta_1$ et $c\theta_2$ est ici réalisé en temps réel, que le convoi 400 soit immobile ou en déplacement en marche arrière. Lorsque le convoi 400 est en déplacement en marche arrière, ce calcul est réalisé en réactualisant les valeurs mesurées et calculées au fur et à mesure du déplacement du convoi 400 en fonction notamment de l'évolution de la valeur de $\varphi$. Ainsi, les valeurs de $c\theta_1$ et $c\theta_2$ sont recalculées puis transmises aux dispositifs 30 respectifs à divers instants au cours de la marche arrière du convoi 400. Par exemple, les valeurs de $c\theta_1$ et $c\theta_2$ sont réactualisées toutes les 10ms ou toutes les 100$\mu$s.

Avantageusement, l'unité 430 est apte à détecter si le convoi 400 est dans une position non alignée lorsque le conducteur du convoi 400 (c'est-à-dire, ici, le conducteur du véhicule 410 situé en tête du convoi 400) souhaite débuter une manoeuvre de marche arrière.

Dans ce cas, l'unité 430 est apte à empêcher la marche arrière tant que le convoi n'est pas dans une position alignée.

Un exemple d'un procédé de réalisation d'une marche arrière du convoi 400 va maintenant être décrit, en référence à l'organigramme de la figure 24 et à l'aide des figures 21 et 22.

Lors d'une étape 500, l'unité 430 vérifie automatiquement si le convoi est dans une position alignée. Par exemple, l'unité 430 collecte les valeurs des angles $\theta_1$ et $\theta_2$ mesurées par les capteurs 33B respectifs des dispositifs 30 des véhicules 410 et 412 et compare ces valeurs mesurées par rapport à des valeurs limite prédéfinies. Dans cet exemple, si au moins l'une des valeurs des angles $\theta_1$, $\theta_2$ et $\varphi$ mesurés est supérieure en valeur absolue à une valeur limite prédéfinie égale à 10° ou à 5° ou à 3° ou à 1° ; alors le convoi est considéré comme n'étant pas en position alignée.

Si le convoi 400 est considéré comme n'étant pas en position alignée, alors, la mise en marche arrière est inhibée tant que le convoi 400 n'est pas en position alignée. En effet, si on tente d'enclencher une marche arrière alors que le convoi est immobile et n'est pas aligné, on risque de provoquer un ripage important des pneumatiques des roues d'un des trains 414, 416 ou 418.

Ici, ensuite, lors d'une étape 502, le convoi 400 est automatiquement réaligné.

Si le convoi est considéré comme étant en position alignée, alors le procédé passe à l'étape 504.

Ensuite, une fois que le convoi 400 est dans la position alignée, l'unité 430 autorise le déplacement du convoi 400 en marche arrière, lors d'une étape 504.

Lors d'une étape 506, l'unité 430 asservit les angles $\theta_1$ et $\theta_2$. Cette étape 506 débute ici lorsque le convoi 400 est immobile dans la position alignée, puis se poursuit de façon concomitante au déplacement en marche arrière du convoi 400.

D'abord, les dispositifs 30 des véhicules 410 et 412 sont commandés par l'unité 430 pour accompagner un mouvement de braquage du convoi 400 imposé par le conducteur du convoi. Plus précisément, ici, l'unité 430 :

- collecte les valeurs actuelle de l'angle $\varphi$ mesurées par le capteur 97E ;
- calcule les valeurs de consignes $c\theta_1$ et $c\theta_2$ ;
- délivre des commandes aux dispositifs d'articulation 30 respectifs des véhicules 410 et 412 contenant notamment les valeurs de consigne. Par exemple, ici, un signal de commande contenant la valeur de consigne $c\theta_1$ est transmis à l'unité 33A du véhicule 410 et un signal de commande contenant la valeur de consigne $c\theta_2$ est transmis à l'unité 33A du véhicule 412 par l'intermédiaire de la liaison 446 et de l'unité 432. L'unité 33A du dispositif 30 du véhicule 410 commande l'actionneur 33 du dispositif 30 auquel elle appartient, en fonction de l'angle $\theta_1$ mesuré par le capteur 33B pour que l'angle d'articulation $\theta_1$ soit égal à la valeur de consigne $c\theta_1$. Il en va de même pour l'unité 33A du dispositif 30 du véhicule 412, en référence à l'angle $\theta_2$ et à la valeur de consigne $c\theta_2$.

Ces étapes de collecte, calcul et de délivrance sont ici répétées à différents instants, aussi bien lorsque le convoi 400 est immobile que tant que le convoi 400 se déplacer en marche arrière.

Dans cet exemple, l'unité 432 joue un rôle passif, c'est-à-dire que les valeurs de consigne $c\theta_1$ et $c\theta_2$ sont uniquement calculées par l'unité 430. Cela est dû au fait que le véhicule 412 n'est pas en tête du convoi 400. L'unité 432 a ici uniquement pour fonction, tant que le véhicule 412 est attaché à l'arrière du véhicule 410, de relayer des signaux de commande de l'unité 430 vers le dispositif 30 du véhicule 412. A cet effet, chaque unité 430 ou 432 détermine préalablement, à l'aide du capteur 97B de position de l'attelage 34, si le véhicule auquel elle appartient est en tête du convoi ou non.

Enfin, lors d'une étape 508, la marche arrière s'arrête. Le convoi 400 peut alors s'immobiliser ou se déplacer en marche avant. Le convoi 400 peut également se déplacer à nouveau en marche arrière. Dans ce cas, l'étape 500 est à nouveau appliquée.

Les valeurs des consignes $c\theta_1$ et $c\theta_2$ qui permettent de maintenir les angles $\theta_1$ et $\theta_2$ sur des valeurs où la condition d'optimalité est satisfaite peuvent être calculées différemment. Par exemple, d'autres approximations que celles faites ci-dessus pour obtenir les formules qui donnent les valeurs des consignes $c\theta_1$ et $c\theta_2$ en fonction de l'angle $\varphi$ peuvent être réalisées. Généralement, quelle que soient les formules utilisées, les valeurs des consignes $c\theta_1$ et $c\theta_2$ sont égales, respectivement à $\varphi*[d*(a+b)]/[a*d+a*b+a^2+b*d]$ et $\varphi*[a*(c+d)]/[a*d+a*b+a^2+b*d]$ à 20 % près ou 10 % près ou 5 % près, pour des valeurs d'angle $\varphi$ faibles.

En variante, le convoi 400 comporte des véhicules non motorisés. Par exemple, le convoi 400 est formé d'un véhicule automobile et d'une remorque.

En variante, le véhicule 412 est dépourvu du dispositif 32.

Alternativement, les véhicules 410 et 412 peuvent présenter des différences, notamment dans leurs dimensions. Ainsi, les longueurs a et c peuvent être différentes. De même, les longueurs b et d peuvent être différentes.

En variante, les trains de roues, respectivement, arrière et avant des véhicules 410 et 412 ne sont pas emboîtés. Par exemple, ces trains de roues sont dans la configuration « en tandem » précédemment décrite. Dans ce cas, le train milieu est le train équivalent formé par ces trains en tandem.

En variante, les unités 430 et 432 sont configurées pour que l'unité 430 transmette la valeur de $\varphi$ à l'unité 432 et pour que cette unité 432 calcule la consigne $c\theta_2$ à partir de cette valeur de $\varphi$ transmise.

Avantageusement, l'unité 430 est apte commander un redressement du convoi 400 dans sa position alignée. A cet effet, l'unité 430 est notamment apte à collecter les valeurs d'angles mesurées par les capteurs 33B respectifs des dispositifs 30 des véhicules 410 et 412 et par le capteur 97E.

Les unités 430 et 432 peuvent être réalisées différemment. Par exemple, ces unités 430 et 432 sont réalisées au moyen d'un mécanisme mécanique tel qu'un renvoi de bielles, une chaîne, un câble ou encore une courroie. Ce mécanisme est dimensionné de façon à asservir les angles $\theta_1$ et $\theta_2$ aux valeurs de consigne $c\theta_1$ et $c\theta_2$.

La limitation de la valeur de $\varphi$ peut être réalisée différemment ou même omise.

En variante, l'angle 463 est défini comme ayant pour valeur la moyenne entre les valeurs des angles de braquage des deux roues 460 et 461. Lorsque le train de roues ne comporte qu'une seule roue, alors l'angle 463 est défini comme la valeur d'angle de braquage de cette roue. Il en va de même lorsque le train de roues comporte une direction de type diligence. En variante, cet angle 463 peut être estimé par l'implantation d'un capteur sur un dispositif mécanique reproduisant de façon approché la cinématique cet angle 463.

La réactualisation des valeurs mesurées et calculées par l'unité de commande peut être réalisée à des instants différents. Cette réactualisation peut aussi n'avoir lieu que lorsque le conducteur du convoi 400 manipule le volant 23.

L'asservissement pour réaliser la marche arrière peut également être mis en oeuvre lorsque le convoi 400 est à l'arrêt, en situation de marche arrière et que le conducteur braque sur place les roues du train 416. Le convoi 400 est dit être en situation de marche arrière lorsque le conducteur du convoi 400 a enclenché la marche arrière mais ne met pas en mouvement le convoi 400. Les étapes décrites en référence au déplacement du convoi en marche arrière peuvent ainsi s'appliquer lorsque le convoi 400 est à l'arrêt. Notamment, lors de l'étape 500, le volant 23 est inhibé tant que le convoi 400 est en situation de marche arrière mais n'est pas dans la position alignée. Lors de l'étape 504, l'unité 540 autorise en outre le déplacement du volant 23 pour braquer les roues sur place. Lors de l'étape 506, les opérations d'asservissement, de collecte, calcul et délivrance sont alors réitérées de façon concomitante à l'actionnement sur place du volant 23 par le conducteur du véhicule.

L'asservissement des angles d'articulation $\theta_1$ et $\theta_2$ pour réaliser une marche arrière tel que décrit ici en référence au convoi 400 peut être mis en oeuvre indépendamment des caractéristiques portant sur le caractère attelable des véhicules 410 et 412. Ainsi, cet asservissement peut être réalisé pour un convoi automobile routier dans lequel les véhicules 410 et 412 ne sont pas détachables ou ne sont pas aptes à circuler de façon autonome lorsqu'ils sont détachés l'un de l'autre. Par exemple, cet asservissement peut être mis en oeuvre dans tout véhicule automobile présentant trois trains de roues séparés deux à deux par des dispositifs d'articulations présentant les caractéristiques du dispositif 30. Par exemple, cet asservissement peut être mis en oeuvre dans un véhicule automobile tel qu'un train routier ou un autobus bi-articulé.

## Revendications

**1.** Véhicule automobile (20) routier attelable, comprenant :

- au moins trois roues (42, 44, 46), aptes à faire rouler le véhicule automobile sur une route plane (22), réparties entre deux trains avant (38) et arrière (40) de roues du véhicule automobile ;
- un châssis, comportant :

  • une partie avant (24) sur laquelle est fixée le train avant ;
  • une partie arrière (26) sur laquelle est fixée le train arrière ;
  • un dispositif d'articulation (30), interposé entre les parties avant et arrière du châssis, ce dispositif d'articulation permettant à la partie avant de pivoter, par rapport à la partie arrière, autour d'un axe d'articulation (39) normal à un plan de roulement du véhicule, de manière à modifier un angle d'articulation ($\theta$) du véhicule, ce plan de roulement étant défini comme étant le plan passant par les surfaces de contact entre la route et les roues du véhicule ;

- des attelages avant (34) et arrière (36), situés, respectivement, à l'avant et à l'arrière du véhicule automobile,

  • l'attelage avant (34) étant déplaçable, en alternance, entre :

    ◦ une position attelée, dans laquelle cet attelage avant coopère avec un attelage arrière (60), identique à l'attelage arrière de ce véhicule et situé sur un autre véhicule, pour attacher mécaniquement, sans degré de liberté en rotation en lacet, ces véhicules entre eux, et aligner la partie avant de ce véhicule avec la partie arrière de l'autre véhicule, et

◦ une position dételée, dans laquelle ces véhicules sont détachés l'un de l'autre ;

• l'attelage arrière (36) étant déplaçable, en alternance, entre :

◦ une position attelée, dans laquelle cet attelage arrière coopère avec un attelage avant (66), identique à l'attelage avant de ce véhicule et situé sur un autre véhicule, pour attacher mécaniquement, sans degré de liberté en rotation en lacet, ces véhicules entre eux et aligner la partie arrière de ce véhicule avec la partie avant de l'autre véhicule, et

◦ une position dételée, dans laquelle ces véhicules sont détachés l'un de l'autre ;

**caractérisé en ce que** le véhicule automobile comporte un dispositif de direction (32), apte à modifier, en réponse à une commande d'un conducteur du véhicule, l'angle de braquage ($\varphi$) de chaque roue du train avant, ce dispositif de direction étant apte à être actionné indépendamment du dispositif d'articulation, ce dispositif de direction présentant un déport de chasse (D) strictement inférieur, en valeur absolue, au tiers de la plus petite distance séparant l'axe d'articulation d'un axe transversal du train avant lorsque l'axe transversal du train avant est parallèle à un axe transversal du train arrière, l'axe transversal d'un train de roues étant défini comme étant :

• l'axe passant par le centre géométrique de la surface de contact entre la route et les roues du train de roues lorsque ce train comporte plus d'une roue et que ces roues ne sont pas braquées, et
• l'axe parallèle à l'axe de roulement d'une roue et passant par le centre géométrique de la surface de contact entre la route et cette roue, si le train de roues comporte uniquement cette roue et que cette roue n'est pas braquée.

2. Véhicule selon la revendication 1, dans lequel le véhicule comporte un dispositif de maintien (34A) de l'angle de braquage de chaque roue du train avant, de ce véhicule ou d'un autre véhicule auquel il est attaché, à sa valeur nulle, tant que ce véhicule est attaché à cet autre véhicule.

3. Véhicule selon l'une quelconque des revendications précédentes, dans lequel le dispositif d'articulation (30) comporte un mécanisme commandable de verrouillage (31 C) apte à basculer, en alternance, entre :

- une position verrouillée, dans laquelle il verrouille le dispositif d'articulation dans une position où les parties avant et arrière du châssis du véhicule sont alignées l'une par rapport à l'autre, tant que l'attelage avant de ce véhicule est dételé, et
- une position déverrouillée, dans laquelle les parties avant et arrière sont libres de pivoter, l'une par rapport à l'autre, en rotation autour de l'axe d'articulation (39), tant que l'attelage avant de ce véhicule est attelé.

4. Véhicule selon l'une quelconque des revendications précédentes, dans laquelle le dispositif d'articulation (30) comporte une articulation mécanique (31) incluant une liaison pivot selon l'axe d'articulation (39), cet axe d'articulation étant positionné à égale distance des axes transversaux (48, 50) des trains de roues avant (38) et arrière (40) du véhicule (20).

5. Véhicule selon l'une quelconque des revendications précédentes, dans laquelle le véhicule comporte un dispositif d'articulation (280) comportant des première (252) et seconde (282) poutres s'étendant chacune, parallèlement au plan de roulement du véhicule (20), entre deux extrémités respectivement ancrées aux parties avant et arrière du véhicule par des points d'ancrage (254, 256, 284, 286) comportant chacun une liaison pivot dont l'axe de rotation est perpendiculaire au plan de roulement ;
ces première et seconde poutres étant croisées l'une par rapport à l'autre au niveau de l'axe d'articulation et présentant, lorsque les parties avant (24) et arrière (26) de châssis sont alignées, une symétrie de réflexion par rapport à un plan vertical (283), passant par l'axe d'articulation (39) et parallèle à l'axe transversal du train arrière de roues, l'axe d'articulation étant positionné à équidistance des axes transversaux des trains avant et arrière de roues du véhicule.

6. Véhicule selon l'une quelconque des revendications précédentes, dans lequel les trains avant (38) et arrière (40) présentent des formes complémentaires, de manière à ce que, dans la position attelée, le train avant de l'autre véhicule soit apte à être emboîté dans le train arrière de ce véhicule, de sorte à ce que les axes transversaux des trains arrière et avant, respectivement, de ce véhicule et de l'autre véhicule soient séparés l'un de l'autre par une distance inférieure à la somme du rayon d'une roue de ce train avant et du rayon d'une roue de ce train arrière et, de préférence, de sorte à ce que ces axes transversaux soient confondus entre eux.

7. Véhicule selon l'une quelconque des revendications 1 à 5, dans lequel les attelages avant et arrière sont configurés pour que, dans la position attelée, un axe transversal du train avant de l'autre véhicule soit distant d'un axe transversal du train arrière de ce véhicule d'une distance (224) supérieure ou égale à la somme du rayon d'une roue de ce train avant et du rayon d'une roue de ce train arrière.

8. Véhicule selon la revendication 3, dans lequel le dispositif d'articulation comporte des butées mécaniques (35, 37), agencées pour que le plus petit rayon de braquage du dispositif de direction du véhicule, lorsque le mécanisme commandable de verrouillage est dans sa position verrouillée, soit supérieur au plus petit rayon de braquage autorisé par le dispositif d'articulation.

9. Véhicule selon l'une quelconque des revendications précédentes, dans lequel :

   - le train avant comporte deux roues (301, 302) ;
   - le dispositif de direction comporte une direction Ackermann (300) apte à modifier l'angle de braquage de ces roues.

10. Véhicule selon l'une quelconque des revendications 1 à 8, dans lequel :

   - le train avant comporte une unique roue (42) ;
   - le dispositif de direction (32) comporte une barre de direction (92) reliée mécaniquement à un moyeu (94) de la roue et un palier (96) à l'intérieur duquel la barre de direction pivote.

11. Véhicule selon l'une quelconque des revendications précédentes, comportant :

   • un volant (23) apte à commander le dispositif de direction ;
   • un siège conducteur (21) depuis lequel un conducteur du véhicule est apte à actionner ledit volant ;
   • un habitacle (27) solidaire sans degré de liberté en lacet de la partie avant du châssis de sorte que l'habitacle se déplace par rapport à la partie arrière du châssis lorsque l'angle d'articulation varie, le moyen de commande et le siège conducteur étant fixés à l'intérieur de cet habitacle.

12. Convoi routier automobile (110), comportant au moins deux véhicules automobiles routiers attachés, **caractérisé en ce que** chacun de ces véhicules est conforme à l'une quelconque des revendications précédentes, ces véhicules étant attachés deux à deux au moyen des attelages avant et arrière respectifs de ces véhicules.

13. Procédé de commande d'un véhicule automobile routier attelable conforme à l'une quelconque des revendications 1 à 11, **caractérisé en ce que** :

   - lorsque l'attelage avant est dans sa position attelée (202), le dispositif d'articulation est commandé pour laisser les parties avant et arrière du châssis libres de pivoter autour de l'axe d'articulation et le dispositif de direction est inhibé, de manière à ne pas pouvoir être actionné par le conducteur ;
   - lorsque l'attelage avant est dans la position dételée (204), le dispositif de direction est activé, de manière à pouvoir être actionné par le conducteur.

14. Procédé de commande selon la revendication 13, comportant :

   - la fourniture d'au moins un actionneur commandable, apte à faire varier le positionnement de l'axe instantané de rotation de la partie avant par rapport à la partie arrière du châssis du véhicule ;
   - la commande (206) dudit au moins un actionneur de façon à maintenir l'axe instantané de rotation de la partie avant du châssis par rapport à la partie arrière du châssis :

      • à équidistance des axes transversaux des trains de roues du véhicule, lorsque ces axes transversaux sont parallèles, et
      • sur la bissectrice de l'angle aigu formé par ces axes transversaux lorsque ces axes transversaux ne sont pas parallèles.

**15.** Procédé de commande d'un convoi automobile routier pour réaliser un déplacement en marche arrière, **caractérisé en ce qu'**il comporte :

- la fourniture d'un convoi automobile routier (400) conforme à la revendication 12, ce convoi étant formé de premier et second véhicules (410, 412) attachés entre eux, le premier véhicule (410) étant placé en tête du convoi automobile (400), la tête du convoi désignant l'extrémité du convoi automobile vers laquelle se déplace le convoi automobile lorsque le convoi se déplace en marche avant, la marche avant correspondant à un sens de déplacement opposé à celui de la marche arrière, le second véhicule étant attaché derrière le premier véhicule ;
- le déplacement (504) du convoi en marche arrière ;
- l'asservissement (506) pendant le déplacement en marche arrière des dispositifs d'articulation des premier et second véhicules de manière à maintenir la trajectoire suivie par le centre géométrique du train avant de roues du premier véhicule tangente à un cercle de giration dont le centre est situé à l'intersection des axes transversaux des trains de roues arrière (414, 418) des premier et second véhicules.

**16.** Procédé selon la revendication 15, dans lequel l'asservissement comprend :

• l'asservissement de l'angle d'articulation $\theta_1$, du premier véhicule (410) sur une consigne $c\theta_1$, la valeur de la première consigne $c\theta_1$ étant égale en permanence à $\varphi*[d*(a+b)]/[a*d+a*b+a^2+b*d]$ à 20 % près avec :

• $\varphi$ est la valeur actuelle de l'angle de braquage des roues du train de roues avant (416) du premier véhicule, cet angle $\varphi$ étant, en valeur absolue, inférieur ou égal à 20° ;
• a et c sont, respectivement, les longueurs des parties avant (24) des premier (410) et second (412) véhicules du convoi (400), ces longueurs étant mesurées, pour chaque véhicule, entre l'axe d'articulation (39) dudit véhicule et le centre géométrique du train de roues avant (416, 414) de ce véhicule ;
• b et d sont, respectivement, les longueurs des parties arrière (26) des premier (410) et second (412) véhicules du convoi (400), ces longueurs étant mesurées, pour chaque véhicule, entre l'axe d'articulation (39) dudit véhicule et le centre géométrique du train de roues arrière (414, 418) de ce véhicule ;

• et simultanément, l'asservissement de l'angle d'articulation $\theta_2$ du second véhicule (412) sur une consigne $c\theta_2$, la valeur de la seconde consigne $c\theta_2$ étant égale en permanence à $\varphi*[a*(c+d)]/[a*d+a*b+a^2+b*d]$ à 20 % près.

**Patentansprüche**

**1.** Ziehbares Straßenkraftfahrzeug (20), umfassend:

- mindestens drei Räder (42, 44, 46), die geeignet sind, das Kraftfahrzeug auf einer ebenen Straße (22) fahren zu lassen, die zwischen zwei Vorderradaufhängungen (38) und Hinterradaufhängungen (40) des Kraftfahrzeugs verteilt sind;
- ein Fahrgestell, umfassend:

• einen vorderen Teil (24), auf dem die Vorderradaufhängung befestigt ist;
• einen hinteren Teil (26), auf dem die Hinterradaufhängung befestigt ist;
• eine Gelenkvorrichtung (30), die zwischen den vorderen und hinteren Teilen des Fahrgestells angeordnet ist, wobei es diese Gelenkvorrichtung dem vorderen Teil ermöglicht, in Bezug zum hinteren Teil um eine Gelenkachse (39) normal auf eine Fahrebene des Fahrzeugs zu schwenken, um einen Gelenkwinkel ($\theta$) des Fahrzeugs zu verändern, wobei diese Fahrebene als die Ebene definiert ist, die durch die Kontaktflächen zwischen der Straße und den Rädern des Fahrzeugs verläuft;

- vordere (34) und hintere (36) Anhängevorrichtungen, die sich vorne bzw. hinten am Kraftfahrzeug befinden,

• wobei die vordere Anhängevorrichtung (34) abwechselnd verschiebbar ist zwischen:

◦ einer angehängten Position, in der diese vordere Anhängevorrichtung mit einer hinteren Anhängevorrichtung (60) zusammenwirkt, die mit der hinteren Anhängevorrichtung dieses Fahrzeugs identisch ist und sich auf einem anderen Fahrzeug befindet, um mechanisch ohne Freiheitsgrad bei Wenderotation diese Fahrzeuge aneinander zu befestigen, und den vorderen Teil dieses Fahrzeugs mit dem hinteren Teil des anderen Fahrzeugs auszurichten, und
○ einer abgehängten Position, in der diese Fahrzeuge voneinander gelöst sind;

• wobei die hintere Anhängevorrichtung (36) abwechselnd verschiebbar ist zwischen:

○ einer angehängten Position, in der diese hintere Anhängevorrichtung mit einer vorderen Anhängevorrichtung (66) zusammenwirkt, die mit der vorderen Anhängevorrichtung dieses Fahrzeugs identisch ist und sich auf einem anderen Fahrzeug befindet, um mechanisch ohne Freiheitsgrad bei Wenderotation diese Fahrzeuge aneinander zu befestigen, und den hinteren Teil dieses Fahrzeugs mit dem vorderen Teil des anderen Fahrzeugs auszurichten, und
○ einer abgehängten Position, in der diese Fahrzeuge voneinander gelöst sind;

**dadurch gekennzeichnet, dass** das Kraftfahrzeug eine Lenkvorrichtung (32) umfasst, die geeignet ist, als Antwort auf eine Steuerung eines Lenkers des Fahrzeugs den Einschlagwinkel ($\varphi$) jedes Rades der Vorderradaufhängung zu verändern, wobei diese Lenkvorrichtung geeignet ist, unabhängig von der Gelenkvorrichtung betätigt zu werden, wobei diese Lenkvorrichtung einen Lenkkopfversatz (D) aufweist, der im Absolutwert unbedingt geringer als ein Drittel des kleinsten Abstandes zwischen der Gelenkachse und einer Querachse der Vorderradaufhängung ist, wenn die Querachse der Vorderradaufhängung parallel zu einer Querachse der Hinterradaufhängung ist, wobei die Querachse einer Radaufhängung definiert ist als:
• die Achse, die durch den geometrischen Mittelpunkt der Kontaktfläche zwischen der Straße und den Rädern der Radaufhängung verläuft, wenn diese Aufhängung mehr als ein Rad umfasst und diese Räder nicht eingeschlagen sind; und
• die Achse parallel zur Fahrachse eines Rades, verlaufend durch den geometrischen Mittelpunkt der Kontaktfläche zwischen der Straße und diesem Rad, wenn die Radaufhängung nur dieses Rad umfasst und wenn dieses Rad nicht eingeschlagen ist.

2. Fahrzeug nach Anspruch 1, wobei das Fahrzeug eine Vorrichtung (34A) zum Halten des Einschlagwinkels jedes Rades der Vorderradaufhängung dieses Fahrzeugs oder eines anderen Fahrzeugs, an dem es befestigt ist, auf seinem Nullwert, solange dieses Fahrzeug an diesem anderen Fahrzeug befestigt ist, umfasst.

3. Fahrzeug nach einem der vorhergehenden Ansprüche, bei dem die Gelenkvorrichtung (30) einen steuerbaren Verriegelungsmechanismus (31C) umfasst, der geeignet ist, abwechselnd zu schwenken zwischen:

- einer verriegelten Position, in der er die Gelenkvorrichtung in einer Position verriegelt, in der die vorderen und hinteren Teile des Fahrgestells des Fahrzeugs zueinander ausgerichtet sind, solange die Vorderradaufhängung dieses Fahrzeugs abgehängt ist, und
- einer entriegelten Position, in der die vorderen und hinteren Teile in Bezug zueinander in Drehung um die Gelenkachse (39) frei schwenkbar sind, solange die Vorderradaufhängung dieses Fahrzeugs angehängt ist.

4. Fahrzeug nach einem der vorhergehenden Ansprüche, bei dem die Gelenkvorrichtung (30) ein mechanisches Gelenk (31) einschließlich einer Schwenkverbindung entlang der Gelenkachse (39) umfasst, wobei diese Gelenkachse in gleichem Abstand zu den Querachsen (48, 50) der Vorderrad-(38) und Hinterradaufhängungen (40) des Fahrzeugs (20) angeordnet ist.

5. Fahrzeug nach einem der vorhergehenden Ansprüche, wobei das Fahrzeug eine Gelenkvorrichtung (280) umfasst, die erste (252) und zweite (282) Träger umfasst, die sich jeweils parallel zur Fahrebene des Fahrzeugs (20) zwischen zwei Enden erstrecken, die jeweils an den vorderen und hinteren Teilen des Fahrzeugs durch Verankerungspunkte (254, 256, 284, 286) verankert sind, jeweils umfassend eine Schwenkverbindung, deren Drehachse auf die Fahrebene senkrecht ist;
wobei diese ersten und zweiten Träger zueinander im Bereich der Gelenkachse gekreuzt sind und, wenn der vordere (24) und hintere Teil (26) des Fahrgestells ausgerichtet sind, eine Reflexionssymmetrie in Bezug zu einer Vertikalebene (283) aufweisen, die durch die Gelenkachse (39) verläuft und zur Querachse der Hinterradaufhängung parallel ist, wobei die Gelenkachse in gleichem Abstand zu den Querachsen der Vorderrad- und Hinterradaufhängungen des Fahrzeugs angeordnet ist.

6. Fahrzeug nach einem der vorhergehenden Ansprüche, bei dem die Vorderrad-(38) und Hinterradaufhängungen (40) komplementäre Formen aufweisen, so dass in der angehängten Position die Vorderradaufhängung des anderen Fahrzeugs geeignet ist, in die Hinterradaufhängung dieses Fahrzeugs eingesteckt zu werden, so dass die Querachsen der Vorderrad- und Hinterradaufhängungen dieses Fahrzeugs bzw. des anderen Fahrzeugs voneinander um einen Abstand kleiner als die Summe des Radius eines Rades dieser Vorderradaufhängung und des Radius eines Rades dieser Hinterradaufhängung getrennt sind, und so dass vorzugsweise diese Querachsen zusammenfallen.

7. Fahrzeug nach einem der Ansprüche 1 bis 5, bei dem die vorderen und hinteren Anhängevorrichtungen dazu vorgesehen sind, dass in der angehängten Position eine Querachse der Vorderradaufhängung des anderen Fahrzeugs von einer Querachse der Hinterradaufhängung dieses Fahrzeugs um einen Abstand (224) größer oder gleich der Summe des Radius eines Rades dieser Vorderradaufhängung und des Radius eines Rades dieser Hinterradaufhängung beabstandet ist.

8. Fahrzeug nach Anspruch 3, bei dem die Gelenkvorrichtung mechanische Anschläge (35, 37) umfasst, die dazu vorgesehen sind, dass der kleinste Einschlagradius der Lenkvorrichtung des Fahrzeugs, wenn der steuerbare Verriegelungsmechanismus in seiner verriegelten Position ist, größer als der kleinste von der Gelenkvorrichtung gestattete Einschlagradius ist.

9. Fahrzeug nach einem der vorhergehenden Ansprüche, bei dem:

    - die Vorderradaufhängung zwei Räder (301, 302) umfasst;
    - die Lenkvorrichtung eine Ackermann-Lenkung (300) umfasst, die geeignet ist, den Einschlagwinkel dieser Räder zu verändern.

10. Fahrzeug nach einem der Ansprüche 1 bis 8, bei dem:

    - die Vorderradaufhängung ein einziges Rad (42) umfasst;
    - die Lenkvorrichtung (32) eine Lenkstange (92), die mechanisch mit einer Nabe (94) des Rades verbunden ist, und ein Lager (96) umfasst, in dem die Lenkstange schwenkt.

11. Fahrzeug nach einem der vorhergehenden Ansprüche, umfassend:

    • ein Lenkrad (23), das geeignet ist, die Lenkvorrichtung zu steuern;
    • einen Fahrersitz (21), von dem aus ein Fahrer des Fahrzeugs das Lenkrad bedienen kann;
    • einen Fahrgastraum (27), der ohne Wendefreiheitsgrad mit dem vorderen Teil des Fahrgestells verbunden ist, so dass sich der Fahrgastraum in Bezug zum hinteren Teil des Fahrgestells verschiebt, wenn sich der Gelenkwinkel verändert, wobei das Steuermittel und der Fahrersitz im Inneren dieses Fahrgastraums befestigt sind.

12. Straßenfahrzeugzug (110), umfassend mindestens zwei aneinander gehängte Straßenkraftfahrzeuge, **dadurch gekennzeichnet, dass** jedes dieser Fahrzeuge einem der vorhergehenden Ansprüche entspricht, wobei diese Fahrzeuge zwei und zwei mit Hilfe der jeweiligen vorderen und hinteren Anhängevorrichtungen dieser Fahrzeuge aneinander angehängt sind.

13. Verfahren zur Steuerung eines ziehbaren Straßenkraftfahrzeugs nach einem der Ansprüche 1 bis 11, **dadurch gekennzeichnet, dass**:

    - wenn sich die vordere Anhängevorrichtung in ihrer angehängten Position (202) befindet, die Gelenkvorrichtung derart gesteuert wird, dass sie die vorderen und hinteren Teile des Fahrgestells frei um die Gelenkachse schwenken lässt und die Lenkvorrichtung gehemmt ist, um nicht vom Fahrer bedient werden zu können;
    - wenn sich die vordere Anhängevorrichtung in der abgehängten Position (204) befindet, die Lenkvorrichtung aktiviert wird, um vom Fahrer bedient werden zu können.

14. Steuerungsverfahren nach Anspruch 13, umfassend:

    - die Bereitstellung mindestens eines steuerbaren Aktuators, der geeignet ist, die Positionierung der momentanen Drehachse des vorderen Teils in Bezug zum hinteren Teil des Fahrgestells des Fahrzeugs zu variieren;
    - die Steuerung (206) des mindestens einen Aktuators, um die momentane Drehachse des vorderen Teils des Fahrgestells in Bezug zum hinteren Teil des Fahrgestells zu halten:

• in gleichem Abstand zu den Querachsen der Radaufhängungen des Fahrzeugs, wenn diese Querachsen parallel sind, und
• auf der Halbierungslinie des spitzen Winkels, der von diesen Querachsen gebildet wird, wenn diese Querachsen nicht parallel sind.

15. Verfahren zur Steuerung eines Straßenkraftfahrzeugzugs, um eine Bewegung im Rückwärtsgang durchzuführen, **dadurch gekennzeichnet, dass** es umfasst:

- die Bereitstellung eines Straßenkraftfahrzeugzugs (400) nach Anspruch 12, wobei dieser Zug von ersten und zweiten Fahrzeugen (410, 412), die aneinander angehängt sind, gebildet ist, wobei das erste Fahrzeug (410) an der Spitze des Kraftfahrzeugzugs (400) angeordnet ist, wobei die Spitze des Zugs das Ende des Kraftfahrzeugzugs bezeichnet, zu dem sich der Kraftfahrzeugzug bewegt, wenn sich der Zug im Vorwärtsgang bewegt, wobei der Vorwärtsgang einer zu jener des Rückwärtsgangs entgegengesetzten Bewegungsrichtung entspricht, wobei das zweite Fahrzeug hinter dem ersten Fahrzeug befestigt ist;
- die Bewegung (504) des Zugs im Rückwärtsgang;
- die Steuerung (506) während der Bewegung im Rückwärtsgang der Gelenkvorrichtungen der ersten und zweiten Fahrzeuge, um die von dem geometrischen Mittelpunkt der Vorderradaufhängung des ersten Fahrzeugs verfolgte Bahn, die einen Wendekreis tangiert, dessen Mittelpunkt sich an der Schnittstelle der Querachsen der Hinterradaufhängungen (414, 418) der ersten und zweiten Fahrzeuge befindet, aufrechtzuerhalten.

16. Verfahren nach Anspruch 15, bei dem die Steuerung umfasst:

• die Steuerung des Gelenkwinkels $\theta_1$ des ersten Fahrzeugs (410) auf einen Sollwert $c\theta_1$, wobei der Wert des ersten Sollwerts $c\theta_1$ permanent gleich $\varphi*[d*(a+b)]/[a*d+a*b+a^2+b*d]$ bis auf 20 % ist;
• wobei $\varphi$ der aktuelle Wert des Einschlagwinkels der Räder der Vorderradaufhängung (416) des ersten Fahrzeugs ist, wobei dieser Winkel $\varphi$ im Absolutwert kleiner oder gleich 20° ist;
• wobei a und c die Längen der vorderen Teile (24) der ersten (410) bzw. zweiten (412) Fahrzeuge des Zuges (400) sind, wobei diese Längen für jedes Fahrzeug zwischen der Gelenkachse (39) des Fahrzeugs und dem geometrischen Mittelpunkt der Vorderradaufhängung (416, 414) dieses Fahrzeugs gemessen werden;
• wobei b und d die Längen der hinteren Teile (26) der ersten (410) bzw. zweiten (412) Fahrzeuge des Zuges (400) sind, wobei diese Längen für jedes Fahrzeug zwischen der Gelenkachse (39) des Fahrzeugs und dem geometrischen Mittelpunkt der Hinterradaufhängung (414, 418) dieses Fahrzeugs gemessen werden;
• und gleichzeitig die Steuerung des Gelenkwinkels $\theta_2$ des zweiten Fahrzeugs (412) auf einen Sollwert $c\theta_2$, wobei der Wert des zweiten Sollwerts $c\theta_2$ permanent gleich $\varphi*[a*(c+d)]/[a*d+a*b+a^2+b*d]$ bis auf 20 % ist.

## Claims

1. Towable road motor vehicle (20), comprising:

- at least three wheels (42, 44, 46), capable of driving the motor vehicle on a flat road (22), distributed between a front set of wheels (38) and a rear set of wheels (40) of the motor vehicle;
- a chassis, including:

• a front portion (24) to which the front set of wheels is fixed;
• a rear portion (26) to which the rear set of wheels is fixed;
• an articulation device (30) disposed between the front and rear portions of the chassis, this articulation device allowing the front portion to pivot relative to the rear portion about an articulation axis (39) normal to a rolling plane of the vehicle so as to modify an articulation angle ($\theta$) of the vehicle, this rolling plane being defined as being the plane passing through the areas of contact between the road and the wheels of the vehicle;

- a front hitch (34) and a rear hitch (36) situated at the front and at the rear, respectively, of the motor vehicle,

• the front hitch (34) being movable, alternately, between:

◦ a coupled position in which this front hitch cooperates with a rear hitch (60) identical to the rear hitch of this vehicle and situated on another vehicle to couple these vehicles mechanically to each other with no degree of freedom in rotation in yaw and to align the front portion of this vehicle with the rear portion of the other vehicle, and
○ an uncoupled position in which these vehicles are uncoupled from each other;

• the rear hitch (36) being movable, alternately, between:

○ a coupled position, in which this rear hitch cooperates with a front hitch (66) identical to the front hitch of this vehicle and situated on another vehicle to couple these vehicles mechanically to each other with no degree of freedom in rotation in yaw and to align the rear portion of this vehicle with the front portion of the other vehicle, and
○ an uncoupled position in which these vehicles are uncoupled from each other;

**characterized in that** the motor vehicle includes a steering device (32) adapted, in response to a command from a driver of the vehicle, to modify the steering angle ($\varphi$) of each wheel of the front set of wheels, this steering device being adapted to be actuated independently of the articulation device, this steering device having a castor offset (D) the absolute value of which is strictly less than one third of the shortest distance separating the articulation axis from a transverse axis of the front set of wheels when the transverse axis of the front set of wheels is parallel to a transverse axis of the rear set of wheels, the transverse axis of a set of wheels being defined as being:

• the axis passing through the geometrical center of the area of contact between the road and the wheels of the set of wheels when that set of wheels includes more than one wheel and those wheels are not steered, and
• the axis parallel to the rolling axis of a wheel and passing through the geometrical center of the area of contact between the road and that wheel if the set of wheels includes only that wheel and that wheel is not steered.

2. Vehicle according to Claim 1, wherein the vehicle includes a device (34A) for maintaining the steering angle of each wheel of the front set of wheels of this vehicle or of another vehicle to which it is coupled at its zero value while this vehicle is coupled to that other vehicle.

3. Vehicle according to either one of the preceding claims, wherein the articulation device (30) includes a controllable locking mechanism (31C) adapted to move alternately between:

- a locked position in which it locks the articulation device in a position in which the front and rear portions of the chassis of the vehicle are aligned relative to each other if the front hitch of this vehicle is uncoupled, and
- an unlocked position in which the front and rear portions are free to pivot relative to each other about the articulation axis (39) if the front hitch of this vehicle is coupled.

4. Vehicle according to any one of the preceding claims, wherein the articulation device (30) includes a mechanical articulation (31) including a pivot connection about the articulation axis (39), this articulation axis being equidistant from the transverse axes (48, 50) of the front set of wheels (38) and the rear set of wheels (40) of the vehicle (20).

5. Vehicle according to any one of the preceding claims, wherein the vehicle includes an articulation device (280) including a first beam (252) and a second beam (282) each extending parallel to the rolling plane of the vehicle (20) between two ends respectively anchored to the front and rear portions of the vehicle via anchor points (254, 256, 284, 286) each including a pivot connection the rotation axis of which is perpendicular to the rolling plane;
these first and second beams crossing each other at the level of the articulation axis and having, when the front portion (24) and the rear portion (26) of the chassis are aligned, mirror image symmetry with respect to a vertical plane (283) passing through the articulation axis (39) and parallel to the transverse axis of the rear set of wheels, the articulation axis being equidistant from the transverse axes of the front and rear sets of wheels of the vehicle.

6. Vehicle according to any one of the preceding claims, wherein the front set of wheels (38) and the rear set of wheels (40) have complementary shapes so that in the coupled position the front set of wheels of the other vehicle can be nested in the rear set of wheels of this vehicle so that the transverse axes of the rear and front sets of wheels, respectively, of this vehicle and of the other vehicle are separated from each other by a distance less than the sum of the radius of a wheel of this front set of wheels and the radius of a wheel of this rear set of wheels and preferably so that these transverse axes coincide.

7. Vehicle according to any one of Claims 1 to 5, wherein the front and rear hitches are configured so that in the coupled position a transverse axis of the front set of wheels of the other vehicle is at a distance (224) from a transverse axis of the rear set of wheels of this vehicle greater than or equal to the sum of the radius of a wheel of this front set of wheels and the radius of a wheel of this rear set of wheels.

8. Vehicle according to Claim 3, wherein the articulation device includes mechanical stops (35, 37) such that, when the commandable locking mechanism is in its locked position, the smallest steering radius of the steering device of the vehicle is greater than the smallest steering radius allowed by the articulation device.

9. Vehicle according to any one of the preceding claims, wherein:

   - the front set of wheels includes two wheels (301, 302);
   - the steering device includes an Ackermann steering mechanism (300) adapted to modify the steering angle of these wheels.

10. Vehicle according to any one of Claims 1 to 8, wherein:

    - the front set of wheels includes a single wheel (42);
    - the steering device (32) includes a steering bar (92) mechanically connected to a hub (94) of the wheel and a bearing (96) inside which the steering bar pivots.

11. Vehicle according to any one of the preceding claims, including:

    • a steering wheel (23) adapted to control the steering device;
    • a driver's seat (21) from which a driver of the vehicle can actuate said steering wheel;
    • a passenger compartment (27) fastened with no degree of freedom in yaw to the front portion of the chassis so that the passenger compartment moves relative to the rear portion of the chassis when the articulation angle varies, the control means and the driver's seat being fixed inside this passenger compartment.

12. Road motor convoy (110) including at least two coupled road motor vehicles, **characterized in that** each of these vehicles is according to any one of the preceding claims, these vehicles being coupled in pairs by means of the respective front and rear hitches of these vehicles.

13. Method of controlling a towable road motor vehicle according to any one of Claims 1 to 11, **characterized in that**:

    - when the front hitch is in its coupled position (202) the articulation device is commanded to allow the front and rear portions of the chassis to pivot about the articulation axis and the steering device is inhibited so that it cannot be actuated by the driver;
    - when the front hitch is in the uncoupled position (204) the steering device is activated so that it can be actuated by the driver.

14. Control method according to Claim 13, including:

    - the provision of at least one commandable actuator adapted to vary the position of the instantaneous rotation axis of the front portion relative to the rear portion of the chassis of the vehicle;
    - controlling (206) said at least one actuator so as to maintain the instantaneous rotation axis of the front portion of the chassis relative to the rear portion of the chassis:

      • equidistant from the transverse axes of the sets of wheels of the vehicle when these transverse axes are parallel, and
      • on the bisector of the acute angle formed by these transverse axes when these transverse axes are not parallel.

15. Method of controlling reversing of a road motor convoy, **characterized in that** it includes:

    - the provision of a road motor convoy (400) according to Claim 12, this convoy being formed of first and second vehicles (410, 412) coupled to each other, the first vehicle (410) being placed at the head of the motor convoy (400), the head of the convoy designating the end of the motor convoy to which the motor convoy moves when the convoy moves forwards, forward motion corresponding to a direction of movement opposite that of rearward motion, the second vehicle being coupled behind the first vehicle;

- the reverse movement (504) of the convoy;

- during reversing, slaving (506) the articulation devices of the first and second vehicles so as to maintain the path followed by the geometrical center of the front set of wheels of the first vehicle tangential to a turning circle the center of which is situated at the intersection of the transverse axes of the rear sets of wheels (414, 418) of the first and second vehicles.

**16.** Method according to Claim 15, wherein said slaving comprises:

• slaving the articulation angle $\theta_1$ of the first vehicle (410) to a setpoint $c\theta_1$, the value of the first setpoint $c\theta_1$ being equal at all times to $\varphi \times [d \times (a+b)] / [a \times d + a \times b + a^2 + b \times d]$ to within 20% where:

• $\varphi$ is the current value of the steering angle of the wheels of the front set of wheels (416) of the first vehicle, the absolute value of this angle $\varphi$ being less than or equal to 20°;
• a and c are respectively the lengths of the front portions (24) of the first vehicle (410) and the second vehicle (412) of the convoy (400), these lengths being measured for each vehicle between the articulation axis (39) of said vehicle and the geometrical center of the front set of wheels (416, 414) of this vehicle;
• b and d are respectively the lengths of the rear portions (26) of the first vehicle (410) and the second vehicle (412) of the convoy (400), these lengths being measured for each vehicle between the articulation axis (39) of said vehicle and the geometrical center of the rear set of wheels (414, 418) of this vehicle; and

• simultaneously slaving the articulation angle $\theta_2$ of the second vehicle (412) to a setpoint $c\theta_2$, the value of the second setpoint $c\theta_2$ being equal to all times to $\varphi \times [a \times (c+d)]/[a \times d + a \times b + a^2 + b \times d]$ to within 20%.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

## Fig. 17

## Fig. 18

## Fig. 19

## Fig. 20

Fig. 21

Fig. 22

X

466

460

464

465

463

47

461

464

463

462

47

=

# Fig. 23

500

502

504

506

508

# Fig. 24

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1046574 B1, WILLIAM M.C. RENDALL
- WO 200710062 A2, RENDALL WILLIAM MICHAEL
- US 5417300 A, SCHULTZ RICHARD E
- WO 9840263 A, TOIT CHARL WILHELMUS DU
- US 3294418 A, T.A. MIDDLESWORTH